(19) Europäisches Patentamt
European Patent Office
Office européen des brevets

(11) **EP 4 228 330 A1**

(12) **EUROPEAN PATENT APPLICATION**
published in accordance with Art. 153(4) EPC

(43) Date of publication:
**16.08.2023 Bulletin 2023/33**

(21) Application number: **21894023.7**

(22) Date of filing: **19.11.2021**

(51) International Patent Classification (IPC):
**H04W 48/18** (2009.01)

(52) Cooperative Patent Classification (CPC):
**G06N 3/04; G06N 3/08; G06N 5/00; H04W 24/02; H04W 48/18**

(86) International application number:
**PCT/CN2021/131777**

(87) International publication number:
**WO 2022/105876 (27.05.2022 Gazette 2022/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.11.2020 CN 202011322773**

(71) Applicant: **Huawei Technologies Co., Ltd. Shenzhen, Guangdong 518129 (CN)**

(72) Inventors:
- HUANGFU, Yourui
  Shenzhen, Guangdong 518129 (CN)
- WANG, Jian
  Shenzhen, Guangdong 518129 (CN)
- LI, Rong
  Shenzhen, Guangdong 518129 (CN)
- WANG, Jun
  Shenzhen, Guangdong 518129 (CN)

(74) Representative: **Epping - Hermann - Fischer Patentanwaltsgesellschaft mbH Schloßschmidstraße 5 80639 München (DE)**

(54) **METHOD AND APPARATUS FOR SELECTING DECISION**

(57) This application provides a decision selection method and apparatus, so as to obtain state information of a communication system; determine, based on the state information, performance corresponding to each of M first decisions and/or a quantity of times each first decision is explored, where the M first decisions are decisions that are explorable under the state information, and M is a positive integer; and further determine a target first decision from the M first decisions based on the performance corresponding to each first decision and/or the quantity of times each first decision is explored. In technical solutions of this application, a decision may be selected based on performance corresponding to an explorable decision and/or a quantity of times the explorable decision has been explored. In this way, random exploration can be avoided, thereby facilitating reliable running of the communication system.

FIG. 3

## Description

This application claims priority to Chinese Patent Application No. 202011322773.3, filed with the China National Intellectual Property Administration on November 23, 2020 and entitled "DECISION SELECTION METHOD AND APPARATUS", which is incorporated herein by reference in its entirety.

## TECHNICAL FIELD

This application relates to the communication field, and more specifically, to a decision selection method and apparatus.

## BACKGROUND

A wireless communication system is usually faced with changing channels, changing environments, and changing users. Non-ideal hardware and non-ideal modeling make it difficult for a communication system to find, in changing, an optimal decision through calculation by using a theoretical formula. As a result, the optimal decision is usually not easy to obtain, and sometimes a high-complexity traversal search even needs to be performed to obtain the optimal decision. A sub-optimal decision may be obtained by solving an optimization problem, but complexity of solving the optimization problem is also high, and the optimization problem is also not easy to solve in some scenarios.

Deep reinforcement learning may be used to search for an optimal decision through interaction between a neural network model and an environment. With a communication system used as an environment, deep reinforcement learning may be used to search for an optimal decision for the communication system. Usually, for a complex specific communication scenario, a better decision can be found only through exploration. However, in an existing communication system, to ensure reliable running of the communication system, usually, a universal and conservative decision is persistently selected. As a result, most components of the communication system work under non-optimal performance for a long time, and a requirement of a future high-performance communication system cannot be met.

## SUMMARY

This application provides a decision selection method and apparatus, so as to facilitate reliable running of a communication system.

According to a first aspect, this application provides a decision selection method. The method includes: obtaining state information of a communication system; determining, based on the state information, performance corresponding to each of M first decisions and/or a quantity of times each first decision is explored, where the M first decisions are decisions that are explorable under the state information, and M is a positive integer; and determining a target first decision from the M first decisions based on the performance corresponding to each first decision and/or the quantity of times each first decision is explored.

In the foregoing technical solution, a decision may be selected based on performance corresponding to an explorable decision and/or a quantity of times the explorable decision has been explored. In this way, random exploration can be avoided, thereby facilitating reliable running of the communication system.

With reference to the first aspect, in a possible implementation, the method further includes: determining performance corresponding to each of K second decisions and/or a quantity of times each second decision is explored, where the K second decisions are decisions that are explorable after the target first decision is selected, and K is a positive integer; and determining a target second decision from the K second decisions based on the performance corresponding to each second decision and/or the quantity of times each second decision is explored.

A decision in the communication system is usually a series of decisions rather than a single-step decision. In the foregoing technical solution, for each of a plurality of steps of decisions, a decision may be selected based on performance corresponding to a currently explorable decision and/or a quantity of times the currently explorable decision has been explored. In this way, random exploration can be avoided, thereby facilitating reliable running of the communication system.

With reference to the first aspect or the foregoing possible implementation, in another possible implementation, the determining, based on the state information, performance corresponding to each of M first decisions and/or a quantity of times each first decision is explored includes: cyclically performing the following steps N times, to obtain the performance corresponding to each first decision and/or the quantity of times each first decision is explored, where N is an integer greater than 1: selecting a to-be-explored first decision from the M first decisions based on current performance corresponding to each first decision and/or a current quantity of times each first decision is explored; and updating, based on the state information and a model of the communication system, performance corresponding to the to-be-explored first decision, and/or adding 1 to a quantity of times the to-be-explored first decision is explored.

In the foregoing technical solution, according to this application, decision exploration may be guided by using a known model in the communication system. In this way, random exploration can be avoided, thereby facilitating reliable running of the communication system.

With reference to any one of the first aspect or the foregoing possible implementations, in another possible implementation, the method further includes: selecting a to-be-explored second decision from the K second decisions based on current performance corresponding to each of the K second decisions and/or a current quantity of times each second decision is explored, where the K second decisions are decisions that are explorable after the to-be-explored first decision is selected; updating, based on the state information and a model of the communication system, performance corresponding to the to-be-explored second decision, and/or adding 1 to a quantity of times the to-be-explored second decision is explored; and updating, based on the performance corresponding to the to-be-explored second decision, performance corresponding to the to-be-explored first decision, and/or adding 1 to a quantity of times the to-be-explored first decision is explored.

With reference to any one of the first aspect or the foregoing possible implementations, in another possible implementation, the selecting a to-be-explored first decision from the M first decisions based on current performance corresponding to each first decision and/or a current quantity of times each first decision is explored includes: selecting the to-be-explored first decision from the M first decisions based on the current performance corresponding to each first decision and/or the current quantity of times each first decision is explored, and an exploration coefficient of each first decision, where the exploration coefficient is used to control a tendency in decision selection.

In the foregoing technical solution, the tendency in decision selection may be controlled by using the exploration coefficient. In this way, random exploration can be avoided, thereby facilitating reliable running of the communication system.

With reference to any one of the first aspect or the foregoing possible implementations, in another possible implementation, the selecting the to-be-explored first decision from the M first decisions based on the current performance corresponding to each first decision and/or the current quantity of times each first decision is explored, and an exploration coefficient of each first decision includes: selecting the to-be-explored first decision from the M first decisions based on $y_1 = x_1 + C_1 \cdot b_1$, where a value of $y_1$ corresponding to the to-be-explored first decision is the largest, $x_1$ is a function of the current performance corresponding to each first decision, $C_1$ is the exploration coefficient, $C_1$ is a constant, and $b_1$ is a function of a reciprocal of the current quantity of times each first decision is explored.

With reference to any one of the first aspect or the foregoing possible implementations, in another possible implementation, the selecting the to-be-explored first decision from the M first decisions based on $y_1 = x_1 + C_1 \cdot b_1$ includes:

determining the to-be-explored first decision from the M first decisions based on
$$y_1 = X_{1d} + C_1 \cdot \sqrt{\frac{2 \ln N_1}{N_{1d}}}$$
, where $X_{1d}$ is current performance corresponding to the $d^{th}$ first decision in the M first decisions, $N_1$ is a current total quantity of times the M first decisions are explored, and $N_{1d}$ is a current quantity of times the $d^{th}$ first decision is explored.

With reference to any one of the first aspect or the foregoing possible implementations, in another possible implementation, the determining, based on the state information, performance corresponding to each of M first decisions and/or a quantity of times each first decision is explored includes: determining, based on the state information and historical information, the performance corresponding to each first decision and/or the quantity of times each first decision is explored, where the historical information includes performance corresponding to each first decision and/or a quantity of times each first decision is explored under the state information.

In the foregoing technical solution, decision exploration may be guided by using the historical information in the communication system. In this way, random exploration can be avoided, thereby facilitating reliable running of the communication system.

With reference to any one of the first aspect or the foregoing possible implementations, in another possible implementation, the determining a target first decision from the M first decisions based on the performance corresponding to each first decision and/or the quantity of times each first decision is explored includes: determining the target first decision from the M first decisions based on the performance corresponding to each first decision and/or the quantity of times each first decision is explored, and an exploration coefficient of each first decision, where the exploration coefficient is used to control a tendency in decision selection.

In the foregoing technical solution, the tendency in decision selection may be controlled by using the exploration coefficient. This helps select a more suitable decision, thereby facilitating reliable running of the communication system.

With reference to any one of the first aspect or the foregoing possible implementations, in another possible implementation, the selecting the target first decision from the M first decisions based on the performance corresponding to each first decision and/or the quantity of times each first decision is explored, and an exploration coefficient of each first decision includes: selecting the target first decision from the M first decisions based on $y_2 = x_2 + C_2 \cdot b_2$, where a

value of $y_2$ corresponding to the target first decision is the largest, $x_2$ is a function of the performance corresponding to each first decision, $C_2$ is the exploration coefficient, and $b_2$ is a function of a reciprocal of the quantity of times each first decision is explored.

With reference to any one of the first aspect or the foregoing possible implementations, in another possible implementation, the selecting the target first decision from the M first decisions based on $y_2 = x_2 + C_2 \cdot b_2$ includes:

determining the target first decision from the M first decisions based on $$y_2 = X_{2d} + C_2 \cdot \sqrt{\frac{2\ln N_2}{N_{2d}}}$$ , where $X_{2d}$ is performance corresponding to the $d^{th}$ first decision in the M first decisions, $N_2$ is a total quantity of times the M first decisions are explored, $N_{2d}$ is a quantity of times the $d^{th}$ first decision is explored, and $C_2$ is a constant, $C_2$ changes with $N_{2d}$, or $C_2$ is determined by a neural network model.

With reference to any one of the first aspect or the foregoing possible implementations, in another possible implementation, if $C_2$ changes with $N_{2d}$, $C_2$ is 0 when $N_{2d}$ is less than a preset threshold.

In this way, although some explorable decisions have potential exploratory value, such an explorable decision is not explored, because a quantity of times the decision is explored is excessively small and executing the decision in the communication system may bring an unreliable result to the communication system. This facilitates reliable running of the communication system.

With reference to any one of the first aspect or the foregoing possible implementations, in another possible implementation, $C_2$ meets $$C_2 = \begin{cases} C_r > 0 & \text{if } N_{2d} \geq N_t \\ 0 & \text{if } N_{2d} < N_t \end{cases}$$ , where $N_t$ is the preset threshold, $N_t = \sigma \cdot N_2$ and $\sigma$ is a preset constant.

With reference to any one of the first aspect or the foregoing possible implementations, in another possible implementation, the method further includes: training the neural network model based on the state information and the target first decision, where the neural network model is used to output $C_r$.

In the foregoing technical solution, an output of model-based decision exploration may be used to train the neural network model, and a trained neural network model may in turn guide model-based decision exploration.

With reference to any one of the first aspect or the foregoing possible implementations, in another possible implementation, the method further includes: obtaining a parameter used for decision exploration, where the parameter includes at least one of a performance indicator, $N_2$, $C_2$, $C_r$, $\sigma$, or $N_t$.

Optionally, if the method is performed by a terminal, the terminal may obtain the parameter from an access network device.

Optionally, if the method is performed by an access network device, the access network device may obtain the parameter from a terminal.

With reference to any one of the first aspect or the foregoing possible implementations, in another possible implementation, the obtaining a parameter used for decision exploration includes: obtaining the parameter based on a task type.

In this way, different parameters may be used for different tasks, thereby helping obtain a more accurate decision. For example, for a task that requires higher reliability, $C_r$ should be smaller, so that a weight of an exploration item can be reduced; $\sigma$ should be larger, so that an exploration confidence of a decision with an excessively small quantity of exploration times is not increased; and N should be larger, so that a total quantity of exploration times is large, and a final decision is more accurate.

With reference to any one of the first aspect or the foregoing possible implementations, in another possible implementation, the method further includes: obtaining support information, where the support information is used to determine performance corresponding to the first decision, the support information includes at least one of a simulator of the model of the communication system, a simulation condition of the model of the communication system, or historical information of the communication system, and the historical information includes performance corresponding to each decision and/or a quantity of times each decision is explored in different states of the communication system.

With reference to any one of the first aspect or the foregoing possible implementations, in another possible implementation, the method further includes: receiving a sixth message sent by the access network device, where the sixth message is used to query the parameter used for decision exploration, and the parameter includes at least one of the performance indicator, $N_2$, $C_2$, $C_r$, $\sigma$, or $N_t$; and sending a seventh message to the access network device, where the seventh message is used to indicate the parameter.

In the foregoing technical solution, the access network device may query, from the terminal, the parameter used for decision exploration, so that the access network device estimates a time needed for decision exploration, to perform proper processing.

With reference to any one of the first aspect or the foregoing possible implementations, in another possible implementation, the method further includes: receiving a first message sent by the access network device, where the first message is used to query whether a decision exploration capability is provided; sending a second message to the access network device, where the second message is used to indicate that the decision exploration capability is provided; and receiving a fifth message sent by the access network device, where the fifth message is used to indicate that the decision exploration capability is registered with a core network device.

Using a handover task as an example, the access network device needs to assist the terminal in exploring for better performance on the handover task, and therefore, the access network device should perform inquiry and authentication (for a VIP customer) on a reliable exploration capability of the terminal. The terminal has a specific requirement on task reliability of the terminal. For exploration parameter setting, the access network device should inquire a specific setting of the terminal. For a high-value terminal within a coverage area of the access network device, the access network device may register a reliable exploration permission with the core network device for the high-value terminal. For example, a terminal that frequently appears in the coverage area of the access network device greatly helps effective continuous exploration, and a reliable exploration permission may be registered for such a terminal, so as to assist the access network device in improving reliable exploration performance and accumulating experience.

With reference to any one of the first aspect or the foregoing possible implementations, in another possible implementation, the method further includes: receiving an eighth message sent by the terminal, where the eighth message is used to request to start decision exploration; sending an exploration result to the terminal, where the exploration result includes information about the target first decision; and receiving a tenth message sent by the terminal, where the tenth message is used to request to end decision exploration.

In the foregoing technical solution, a start and an end of decision exploration may be defined, thereby facilitating smooth execution of decision exploration.

According to a second aspect, this application provides a decision selection method. The method includes: sending a first message to a terminal, where the first message is used to query whether a decision exploration capability is provided; receiving a second message sent by the terminal, where the second message is used to indicate that the decision exploration capability is provided; sending a third message to a core network device, where the third message is used to request to register the decision exploration capability; receiving a fourth message sent by the core network device, where the fourth message is used to indicate that the decision exploration capability is registered; and sending a fifth message to the terminal, where the fifth message is used to indicate that the decision exploration capability is registered with the core network device.

An access network device needs to assist the terminal in exploring for better performance on a handover task, and therefore, the access network device should perform inquiry and authentication (optional) on a reliable exploration capability of the terminal. The terminal has a specific requirement on task reliability of the terminal. For exploration parameter setting, the access network device should inquire a specific setting of the terminal. For a high-value terminal within a coverage area of the access network device, the access network device may register a reliable exploration permission with the core network device for the high-value terminal. In the foregoing technical solution, a reliable exploration permission may be registered for the terminal, thereby helping assist the access network device in improving reliable exploration performance and accumulating experience.

With reference to the second aspect, in a possible implementation, the method further includes: sending a sixth message to the terminal, where the sixth message is used to query a parameter used for decision exploration; receiving a seventh message sent by the terminal, where the seventh message is used to indicate the parameter; and estimating a decision exploration time based on the parameter.

In the foregoing technical solution, the access network device may query, from the terminal, the parameter used for decision exploration, so that the access network device estimates the time needed for decision exploration, to perform proper processing.

With reference to the second aspect or the foregoing possible implementation, in another possible implementation, the method further includes: sending support information to the terminal, where the support information includes at least one of a simulator of a model of a communication system, a simulation condition of the model of the communication system, or historical information of the communication system, and the historical information includes performance corresponding to each decision and/or a quantity of times each decision is explored in different states of the communication system.

According to a third aspect, this application provides a decision selection method. The method includes: sending an eighth message to an access network device, where the eighth message is used to request to start decision exploration; receiving an exploration result sent by the access network device; and sending a tenth message to the access network device, where the tenth message is used to request to end decision exploration.

In the foregoing technical solution, a start and an end of decision exploration may be defined, thereby facilitating smooth execution of decision exploration.

According to a fourth aspect, this application provides a decision selection method. The method includes: receiving a thirteenth message sent by an access network device, where the thirteenth message is used to request historical information, and the historical information includes performance corresponding to each decision and/or a quantity of times each decision is explored in different states of a communication system; and sending a fifteenth message to the access network device, where the fifteenth message is used to indicate the historical information.

In the foregoing technical solution, the historical information may be provided for the access network device, to implement decision exploration based on the historical information.

With reference to the fourth aspect, in a possible implementation, the method further includes: receiving a third message sent by the access network device, where the third message is used to request to register a decision exploration capability for a terminal; and sending a fourth message to the access network device, where the fourth message is used to indicate that the decision exploration capability is registered.

With reference to the fourth aspect or the foregoing possible implementation, in another possible implementation, before the sending a fourth message to the access network device, the method further includes: determining to allow the terminal to explore a decision.

According to a fifth aspect, this application provides a decision selection apparatus, where the apparatus includes:

a processing unit, configured to: obtain state information of a communication system; determine, based on the state information, performance corresponding to each of M first decisions and/or a quantity of times each first decision is explored, where the M first decisions are decisions that are explorable under the state information, and M is a positive integer; and determine a target first decision from the M first decisions based on the performance corresponding to each first decision and/or the quantity of times each first decision is explored.

In the foregoing technical solution, a decision may be selected based on performance corresponding to an explorable decision and/or a quantity of times the explorable decision has been explored. In this way, random exploration can be avoided, thereby facilitating reliable running of the communication system.

With reference to the fifth aspect, in a possible implementation, the processing unit is further configured to: determine performance corresponding to each of K second decisions and/or a quantity of times each second decision is explored, where the K second decisions are decisions that are explorable after the target first decision is selected, and K is a positive integer; and determine a target second decision from the K second decisions based on the performance corresponding to each second decision and/or the quantity of times each second decision is explored.

A decision in the communication system is usually a series of decisions rather than a single-step decision. In the foregoing technical solution, for each of a plurality of steps of decisions, a decision may be selected based on performance corresponding to a currently explorable decision and/or a quantity of times the currently explorable decision has been explored. In this way, random exploration can be avoided, thereby facilitating reliable running of the communication system.

With reference to the fifth aspect or the foregoing possible implementation, in another possible implementation, the processing unit is specifically configured to: cyclically perform the following steps N times, to obtain the performance corresponding to each first decision and/or the quantity of times each first decision is explored, where N is an integer greater than 1: selecting a to-be-explored first decision from the M first decisions based on current performance corresponding to each first decision and/or a current quantity of times each first decision is explored; and updating, based on the state information and a model of the communication system, performance corresponding to the to-be-explored first decision, and/or adding 1 to a quantity of times the to-be-explored first decision is explored.

In the foregoing technical solution, according to this application, decision exploration may be guided by using a known model in the communication system. In this way, random exploration can be avoided, thereby facilitating reliable running of the communication system.

With reference to any one of the fifth aspect or the foregoing possible implementations, in another possible implementation, the method further includes: selecting a to-be-explored second decision from the K second decisions based on current performance corresponding to each of the K second decisions and/or a current quantity of times each second decision is explored, where the K second decisions are decisions that are explorable after the to-be-explored first decision is selected; updating, based on the state information and a model of the communication system, performance corresponding to the to-be-explored second decision, and/or adding 1 to a quantity of times the to-be-explored second decision is explored; and updating, based on the performance corresponding to the to-be-explored second decision, performance corresponding to the to-be-explored first decision, and/or adding 1 to a quantity of times the to-be-explored first decision is explored.

With reference to any one of the fifth aspect or the foregoing possible implementations, in another possible implementation, the processing unit is specifically configured to: select the to-be-explored first decision from the M first decisions based on the current performance corresponding to each first decision and/or the current quantity of times each first decision is explored, and an exploration coefficient of each first decision, where the exploration coefficient is used to control a tendency in decision selection.

In the foregoing technical solution, the tendency in decision selection may be controlled by using the exploration coefficient. In this way, random exploration can be avoided, thereby facilitating reliable running of the communication system.

With reference to any one of the fifth aspect or the foregoing possible implementations, in another possible implementation, the processing unit is specifically configured to: select the to-be-explored first decision from the M first decisions based on $y_1 = x_1 + C_1 \cdot b_1$, where a value of $y_1$ corresponding to the to-be-explored first decision is the largest, $x_1$ is a function of the current performance corresponding to each first decision, $C_1$ is the exploration coefficient, $C_1$ is a constant, and $b_1$ is a function of a reciprocal of the current quantity of times each first decision is explored.

With reference to any one of the fifth aspect or the foregoing possible implementations, in another possible implementation, the processing unit is specifically configured to: determine the to-be-explored first decision from the M

$$ y_1 = X_{1d} + C_1 \cdot \sqrt{\frac{2\ln N_1}{N_{1d}}} $$

first decisions based on , where $X_{1d}$ is current performance corresponding to the $d^{th}$ first decision in the M first decisions, $N_1$ is a current total quantity of times the M first decisions are explored, and $N_{1d}$ is a current quantity of times the $d^{th}$ first decision is explored.

With reference to any one of the fifth aspect or the foregoing possible implementations, in another possible implementation, the processing unit is specifically configured to: determine, based on the state information and historical information, the performance corresponding to each first decision and/or the quantity of times each first decision is explored, where the historical information includes performance corresponding to each first decision and/or a quantity of times each first decision is explored under the state information.

In the foregoing technical solution, decision exploration may be guided by using the historical information in the communication system. In this way, random exploration can be avoided, thereby facilitating reliable running of the communication system.

With reference to any one of the fifth aspect or the foregoing possible implementations, in another possible implementation, the processing unit is specifically configured to: determine the target first decision from the M first decisions based on the performance corresponding to each first decision and/or the quantity of times each first decision is explored, and an exploration coefficient of each first decision, where the exploration coefficient is used to control a tendency in decision selection.

In the foregoing technical solution, the tendency in decision selection may be controlled by using the exploration coefficient. This helps select a more suitable decision, thereby facilitating reliable running of the communication system.

With reference to any one of the fifth aspect or the foregoing possible implementations, in another possible implementation, the processing unit is specifically configured to: select the target first decision from the M first decisions based on $y_2 = x_2 + C_2 \cdot b_2$, where a value of $y_2$ corresponding to the target first decision is the largest, $x_2$ is a function of the performance corresponding to each first decision, $C_2$ is the exploration coefficient, and $b_2$ is a function of a reciprocal of the quantity of times each first decision is explored.

With reference to any one of the fifth aspect or the foregoing possible implementations, in another possible implementation, the processing unit is specifically configured to: determine the target first decision from the M first

$$ y_2 = X_{2d} + C_2 \cdot \sqrt{\frac{2\ln N_2}{N_{2d}}} $$

decisions based on , where $X_{2d}$ is performance corresponding to the $d^{th}$ first decision in the M first decisions, $N_2$ is a total quantity of times the M first decisions are explored, $N_{2d}$ is a quantity of times the $d^{th}$ first decision is explored, and $C_2$ is a constant, $C_2$ changes with $N_{2d}$, or $C_2$ is determined by a neural network model.

With reference to any one of the fifth aspect or the foregoing possible implementations, in another possible implementation, if $C_2$ changes with $N_{2d}$, $C_2$ is 0 when $N_{2d}$ is less than a preset threshold.

In this way, although some explorable decisions have potential exploratory value, such an explorable decision is not explored, because a quantity of times the decision is explored is excessively small and executing the decision in the communication system may bring an unreliable result to the communication system. This facilitates reliable running of the communication system.

With reference to any one of the fifth aspect or the foregoing possible implementations, in another possible

$$ C_2 = \begin{cases} C_r > 0 & \text{if } N_{2d} \geq N_t \\ 0 & \text{if } N_{2d} < N_t \end{cases} $$

implementation, $C_2$ meets , where $N_t$ is the preset threshold, $N_t = \sigma \cdot N_2$, and $\sigma$ is a preset constant.

With reference to any one of the fifth aspect or the foregoing possible implementations, in another possible implementation, the processing unit is further configured to: train the neural network model based on the state information and the target first decision, where the neural network model is used to output $C_r$.

In the foregoing technical solution, an output of model-based decision exploration may be used to train the neural network model, and a trained neural network model may in turn guide model-based decision exploration.

With reference to any one of the fifth aspect or the foregoing possible implementations, in another possible implementation, the processing unit is further configured to: obtain a parameter used for decision exploration, where the parameter includes at least one of a performance indicator, $N_2$, $C_2$, $C_r$, $\sigma$, or $N_t$.

Optionally, if the method is performed by a terminal, the terminal may obtain the parameter from an access network device.

Optionally, if the method is performed by an access network device, the access network device may obtain the parameter from a terminal.

With reference to any one of the fifth aspect or the foregoing possible implementations, in another possible implementation, the processing unit is specifically configured to: obtain the parameter based on a task type.

In this way, different parameters may be used for different tasks, thereby helping obtain a more accurate decision. For example, for a task that requires higher reliability, $C_r$ should be smaller, so that a weight of an exploration item can be reduced; $\sigma$ should be larger, so that an exploration confidence of a decision with an excessively small quantity of exploration times is not increased; and N should be larger, so that a total quantity of exploration times is large, and a final decision is more accurate.

With reference to any one of the fifth aspect or the foregoing possible implementations, in another possible implementation, the processing unit is further configured to: obtain support information, where the support information is used to determine performance corresponding to the first decision, the support information includes at least one of a simulator of the model of the communication system, a simulation condition of the model of the communication system, or historical information of the communication system, and the historical information includes performance corresponding to each decision and/or a quantity of times each decision is explored in different states of the communication system.

With reference to any one of the fifth aspect or the foregoing possible implementations, in another possible implementation, the apparatus further includes a transceiver unit, configured to: receive a sixth message sent by the access network device, where the sixth message is used to query the parameter used for decision exploration, and the parameter includes at least one of the performance indicator, $N_2$, $C_2$, $C_r$, $\sigma$, or $N_t$; and send a seventh message to the access network device, where the seventh message is used to indicate the parameter.

In the foregoing technical solution, the access network device may query, from the terminal, the parameter used for decision exploration, so that the access network device estimates a time needed for decision exploration, to perform proper processing.

With reference to any one of the fifth aspect or the foregoing possible implementations, in another possible implementation, the transceiver unit is further configured to: receive a first message sent by the access network device, where the first message is used to query whether a decision exploration capability is provided; send a second message to the access network device, where the second message is used to indicate that the decision exploration capability is provided; and receive a fifth message sent by the access network device, where the fifth message is used to indicate that the decision exploration capability is registered with a core network device.

Using a handover task as an example, the access network device needs to assist the terminal in exploring for better performance on the handover task, and therefore, the access network device should perform inquiry and authentication (for a VIP customer) on a reliable exploration capability of the terminal. The terminal has a specific requirement on task reliability of the terminal. For exploration parameter setting, the access network device should inquire a specific setting of the terminal. For a high-value terminal within a coverage area of the access network device, the access network device may register a reliable exploration permission with the core network device for the high-value terminal. For example, a terminal that frequently appears in the coverage area of the access network device greatly helps effective continuous exploration, and a reliable exploration permission may be registered for such a terminal, so as to assist the access network device in improving reliable exploration performance and accumulating experience.

With reference to any one of the fifth aspect or the foregoing possible implementations, in another possible implementation, the transceiver unit is further configured to: receive an eighth message sent by the terminal, where the eighth message is used to request to start decision exploration; send an exploration result to the terminal, where the exploration result includes information about the target first decision; and receive a tenth message sent by the terminal, where the tenth message is used to request to end decision exploration.

In the foregoing technical solution, a start and an end of decision exploration may be defined, thereby facilitating smooth execution of decision exploration.

According to a sixth aspect, this application provides a decision selection apparatus, where the apparatus includes:

a transceiver unit, configured to: send a first message to a terminal, where the first message is used to query whether a decision exploration capability is provided; receive a second message sent by the terminal, where the second message is used to indicate that the decision exploration capability is provided; send a third message to a core network device, where the third message is used to request to register the decision exploration capability; receive a fourth message sent by the core network device, where the fourth message is used to indicate that the decision exploration capability is registered; and send a fifth message to the terminal, where the fifth message is used to indicate that the decision exploration capability is registered with the core network device.

An access network device needs to assist the terminal in exploring for better performance on a handover task, and therefore, the access network device should perform inquiry and authentication (optional) on a reliable exploration capability of the terminal. The terminal has a specific requirement on task reliability of the terminal. For exploration parameter setting, the access network device should inquire a specific setting of the terminal. For a high-value terminal within a coverage area of the access network device, the access network device may register a reliable exploration permission with the core network device for the high-value terminal. In the foregoing technical solution, a reliable exploration permission may be registered for the terminal, thereby helping assist the access network device in improving reliable exploration performance and accumulating experience.

With reference to the sixth aspect, in a possible implementation, the transceiver unit is further configured to: send a sixth message to the terminal, where the sixth message is used to query a parameter used for decision exploration; and receive a seventh message sent by the terminal, where the seventh message is used to indicate the parameter; and the apparatus further includes a processing unit, configured to estimate a decision exploration time based on the parameter. In the foregoing technical solution, the access network device may query, from the terminal, the parameter used for decision exploration, so that the access network device estimates the time needed for decision exploration, to perform proper processing.

With reference to the sixth aspect or the foregoing possible implementation, in another possible implementation, the transceiver unit is further configured to: send support information to the terminal, where the support information includes at least one of a simulator of a model of a communication system, a simulation condition of the model of the communication system, or historical information of the communication system, and the historical information includes performance corresponding to each decision and/or a quantity of times each decision is explored in different states of the communication system.

According to a seventh aspect, this application provides a decision selection apparatus, where the apparatus includes:

a transceiver unit, configured to send an eighth message to an access network device, where the eighth message is used to request to start decision exploration; receive an exploration result sent by the access network device; and send a tenth message to the access network device, where the tenth message is used to request to end decision exploration.

In the foregoing technical solution, a start and an end of decision exploration may be defined, thereby facilitating smooth execution of decision exploration.

According to an eighth aspect, this application provides a decision selection apparatus, where the apparatus includes:

a transceiver unit, configured to: receive a thirteenth message sent by an access network device, where the thirteenth message is used to request historical information, and the historical information includes performance corresponding to each decision and/or a quantity of times each decision is explored in different states of a communication system; and send a fifteenth message to the access network device, where the fifteenth message is used to indicate the historical information.

In the foregoing technical solution, the historical information may be provided for the access network device, to implement decision exploration based on the historical information.

With reference to the eighth aspect, in a possible implementation, the transceiver unit is further configured to: receive a third message sent by the access network device, where the third message is used to request to register a decision exploration capability for a terminal; and send a fourth message to the access network device, where the fourth message is used to indicate that the decision exploration capability is registered.

With reference to the eighth aspect or the foregoing possible implementation, in another possible implementation, the apparatus further includes a processing unit, configured to: before the fourth message is sent to the access network device, determine to allow the terminal to explore a decision.

According to a ninth aspect, this application provides a communication apparatus, including a processor, a memory, and a transceiver. The memory is configured to store a computer program. The processor is configured to invoke and run the computer program stored in the memory, and control the transceiver to receive and send signals, so that the communication apparatus performs the method according to any one of the first aspect or the possible implementations of the first aspect, performs the method according to any one of the second aspect or the possible implementations of the second aspect, performs the method according to any one of the third aspect or the possible implementations of the third aspect, or performs the method according to any one of the fourth aspect or the possible implementations of the fourth aspect.

According to a tenth aspect, this application provides a communication apparatus, including a processor and a communication interface. The communication interface is configured to receive a signal, and transmit the received signal to the processor. The processor processes the signal, so that the method according to any one of the first aspect or the possible implementations of the first aspect is performed, the method according to any one of the second aspect or the possible implementations of the second aspect is performed, the method according to any one of the third aspect or the possible implementations of the third aspect is performed, or the method according to any one of the fourth aspect or the possible implementations of the fourth aspect is performed.

Optionally, the communication interface may be an interface circuit, and the processor may be a processing circuit.

According to an eleventh aspect, this application provides a chip, including a logic circuit and a communication interface. The communication interface is configured to receive to-be-processed data and/or information. The logic circuit is configured to perform the data and/or information processing according to any one of the foregoing aspects or the implementations of the foregoing aspects, and the communication interface is further configured to output a processing result obtained by the logic circuit.

According to a twelfth aspect, this application provides a computer-readable storage medium. The computer-readable storage medium stores computer instructions. When the computer instructions are run on a computer, the method according to any one of the first aspect or the possible implementations of the first aspect is performed, the method according to any one of the second aspect or the possible implementations of the second aspect is performed, the method according to any one of the third aspect or the possible implementations of the third aspect is performed, or the method according to any one of the fourth aspect or the possible implementations of the fourth aspect is performed. According to a thirteenth aspect, this application provides a computer program product. The computer program product includes computer program code. When the computer program code is run on a computer, the method according to any one of the first aspect or the possible implementations of the first aspect is performed, the method according to any one of the second aspect or the possible implementations of the second aspect is performed, the method according to any one of the third aspect or the possible implementations of the third aspect is performed, or the method according to any one of the fourth aspect or the possible implementations of the fourth aspect is performed. According to a fourteenth aspect, this application provides a wireless communication system, including the communication apparatus according to the fifth aspect, the sixth aspect, the seventh aspect, or the seventh aspect.

## BRIEF DESCRIPTION OF DRAWINGS

FIG. 1 is a schematic diagram of an architecture of a communication system to which embodiments of this application may be applied;
FIG. 2 is an overall flowchart of a decision selection method according to this application;
FIG. 3 is a schematic flowchart of a decision selection method according to this application;
FIG. 4 shows an example of exploration assisted by using historical information;
FIG. 5 is a schematic diagram of multi-step exploration;
FIG. 6 shows an example (1) of exploration assisted by using a model of a communication system;
FIG. 7 shows an example (2) of exploration assisted by using a model of a communication system;
FIG. 8 shows an example of applying a method in this application to a channel coding scenario;
FIG. 9 is a schematic flowchart of registering a reliable exploration capability with a core network device for a terminal;
FIG. 10 is a schematic diagram of signaling interaction when an access network device performs decision selection;
FIG. 11 is a schematic diagram of a structure of a decision selection apparatus according to an embodiment of this application; and
FIG. 12 is another schematic diagram of a structure of a decision selection apparatus according to an embodiment of this application.

## DESCRIPTION OF EMBODIMENTS

The following describes technical solutions in this application with reference to accompanying drawings.

The technical solutions in embodiments of this application may be applied to various communication systems, for example, a global system for mobile communication (global system for mobile communications, GSM), an enhanced data rates for GSM evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronous code division multiple access (time division-synchronization code division multiple access, TD-SCDMA)/long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a narrowband internet of things (narrow band-internet of things, NB-IoT) system, a 5th generation (5th generation, 5G) system or a new radio (new radio, NR) system, a satellite communication system, and a future mobile communication system. The technical solutions in the embodiments of this application may be applied to application scenarios such as (enhanced mobile broadband, eMBB), ultra-reliable and low latency communication (ultra-reliable and low latency communication, URLL), and enhanced machine-type communication (enhanced machine-type communication, eMTC) in a 5G system.

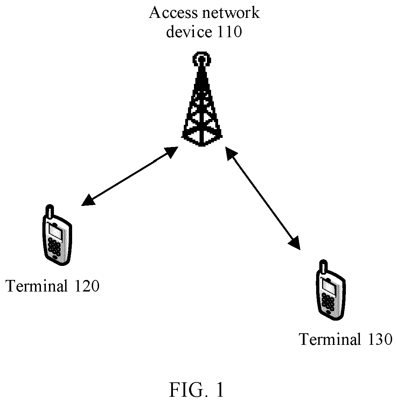

FIG. 1 is a schematic diagram of an architecture of a communication system to which the embodiments of this application may be applied.

As shown in FIG. 1, the communication system 100 may include an access network device (for example, an access network device 110 in FIG. 1) and at least one terminal (for example, a terminal 120 and a terminal 130 in FIG. 1). A wireless communication system usually includes cells, where each cell may include one access network device, a terminal is connected to the access network device in a wireless manner, and the access network device may provide a communication service for a plurality of terminals. The terminal in FIG. 1 may be located in a fixed position, or may be movable. FIG. 1 is merely a schematic diagram. The communication system may further include another network device, for example, may further include a core network device, a wireless relay device, and a wireless backhaul device, which are not shown in FIG. 1. Quantities of access network devices and terminals included in the communication system are not limited in the embodiments of this application.

A terminal in the embodiments of this application may also be referred to as user equipment (user equipment, UE), a user, an access terminal, a subscriber unit, a subscriber station, a mobile station, a mobile console (mobile station, MS), a remote station, a remote terminal, a mobile device, a user terminal, a terminal device, a wireless communication device, a user agent, a user apparatus, or the like. The terminal may be a cellular phone, a smartwatch, a wireless data card, a mobile phone, a tablet computer, a personal digital assistant (personal digital assistant, PDA) computer, a wireless modem, a computing device, another processing device connected to a wireless modem, a handheld device, a laptop computer, a machine type communication (machine type communication, MTC) terminal, a computer with a wireless transceiver function, a virtual reality terminal, an augmented reality terminal, a wireless terminal in industrial control, a wireless terminal in unmanned driving, a wireless terminal in remote surgery, a wireless terminal in a smart grid, a wireless terminal in transportation safety, a wireless terminal in a smart city, a wireless terminal in a smart home, a wireless terminal (for example, a satellite phone or a satellite terminal) in satellite communication, or the like. A specific technology and a specific device form that are used by the terminal are not limited in the embodiments of this application.

An access network device in the embodiments of this application may be a device configured to communicate with a terminal. The access network device may be a base transceiver station (base transceiver station, BTS) in a GSM system or code division multiple access (code division multiple access, CDMA), may be a NodeB (nodeB, NB) in a wideband code division multiple access (wideband code division multiple access, WCDMA) system, may be an evolved NodeB (evolutional nodeB, eNB or eNodeB) in an LTE system, or may be a radio controller in a cloud radio access network (cloud radio access network, CRAN) scenario. Alternatively, the network device may be a relay station, an access point, a vehicle-mounted device, or a wearable device. Alternatively, the network device may be a terminal that undertakes a base station function in device-to-device (device to device, D2D) communication or machine communication. Alternatively, the network device may be a network device in a 5G network, an access network device in a future evolved public land mobile network (public land mobile network, PLMN) network, or the like. This is not limited in the embodiments of this application. In addition, the access network device in the embodiments of this application may alternatively be a module or unit that implements some of functions of a base station, for example, may be a centralized unit (central unit, CU), or may be a distributed unit (distributed unit, DU). A specific technology and a specific device form that are used by the access network device are not limited in the embodiments of this application.

In some implementations, the foregoing base station may include a baseband unit (baseband unit, BBU) and a remote radio unit (remote radio unit, RRU). The BBU and the RRU may be placed in different places. For example, the RRU is remotely deployed, and is placed in a heavy-traffic area, and the BBU is placed in a central equipment room. Alternatively, the BBU and the RRU may be placed in a same equipment room. Alternatively, the BBU and the RRU may be different components at a same rack.

The terminal and the access network device in the embodiments of this application may be deployed on land in manners including indoor or outdoor and handheld or vehicle-mounted, may be deployed on water, or may be deployed on an airplane, a balloon, or an artificial satellite in the air. Application scenarios of the terminal and the access network device are not limited in the embodiments of this application.

The terminal and the access network device in the embodiments of this application may communicate with each other by using a licensed spectrum, may communicate with each other by using a license-free spectrum, or may communicate with each other by using both a licensed spectrum and a license-free spectrum. The terminal and the access network device may communicate with each other by using a spectrum below 6 gigahertz (gigahertz, GHz), may communicate with each other by using a spectrum above 6 GHz, or may communicate with each other by using both a spectrum below 6 GHz and a spectrum above 6 GHz. A spectrum resource used between the terminal and the access network device is not limited in the embodiments of this application.

A wireless communication system is usually faced with changing channels, changing environments, and changing users. Non-ideal hardware and non-ideal modeling make it difficult for a communication system to find, in changing, an optimal decision through calculation by using a theoretical formula. As a result, the optimal decision is usually not easy to obtain, and sometimes a high-complexity traversal search even needs to be performed to obtain the optimal decision. A sub-optimal decision may be obtained by solving an optimization problem, but complexity of solving the optimization problem is also high, and the optimization problem is also not easy to solve in some scenarios. Usually, for a complex specific communication scenario, a better decision can be found only through exploration.

Deep reinforcement learning may be used to search for an optimal decision through interaction between a neural network model and an environment. With a communication system used as an environment, deep reinforcement learning may be used to search for an optimal decision for the communication system.

Model-free (model-free) reinforcement learning algorithms are a most commonly used type in deep reinforcement learning, for example, deep Q network (deep Q network, DQN) and proximal policy optimization (proximal policy optimization, PPO) algorithms. The model-free reinforcement learning algorithms have no model, and totally rely on interaction with an environment to obtain a decision. Therefore, exploration is comparatively random. This is very useful when an environment is very complex and modeling cannot be performed. However, for an actual communication system, random exploration may cause performance deterioration of the communication system. Because a communication system requires comparatively high reliability, such an exploration manner is unacceptable. Therefore, in an existing communication system, to ensure reliable running of the communication system, usually, a universal and conservative decision is persistently selected. As a result, most components of the communication system work under non-optimal performance for a long time, and a requirement of a future high-performance communication system cannot be met.

For the foregoing problem, this application provides a decision selection method and apparatus, so that random exploration can be avoided, thereby facilitating reliable running of a communication system.

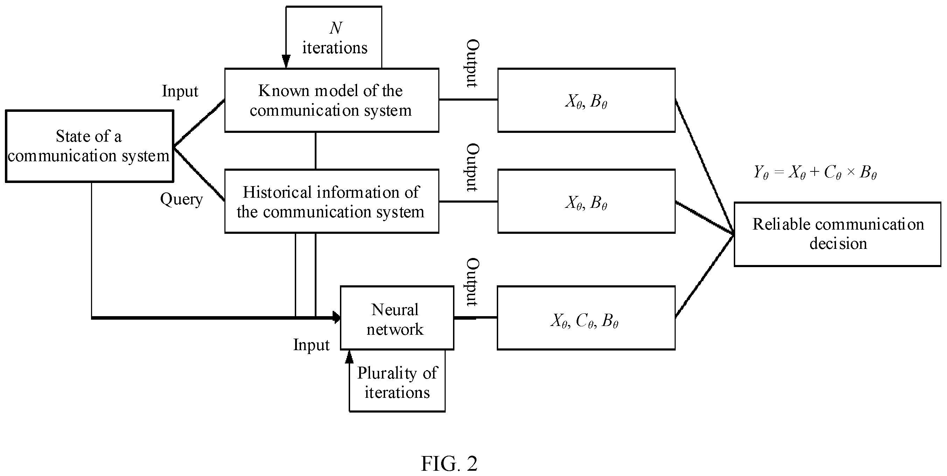

FIG. 2 is an overall flowchart of a decision selection method according to this application.

(1) As shown in FIG. 2, a current state of a communication system may be used as an input to be input to a known model of the communication system. The known model of the communication system may first determine an explorable decision based on the current state of the communication system. The model of the communication system selects a decision from the explorable decision, and evaluates performance corresponding to the decision. Through N iterations, performance $X_\theta$ corresponding to each explored decision $\theta$ and a quantity $B_\theta$ of times each explored decision $\theta$ is explored are obtained, to guide selection of a reliable communication decision. An output of the known model of the communication system may include performance corresponding to the explorable decision.

(2) As shown in FIG. 2, real experience, that is, historical information, of the communication system may be further queried based on the current state of the communication system. The historical information is queried in the current state of the communication system. First, a historical explored decision can be determined. In addition, the historical information can provide the performance $X_\theta$ corresponding to each explored decision $\theta$ and the quantity $B_\theta$ of times each explored decision $\theta$ is explored. The historical information is equivalent to that a plurality of times of exploration have been completed. Selection of the reliable communication decision may be guided based on the historical information, and the historical information is considered as a communication model. This process may also be referred to as model-based exploration. The historical information may include decisions historically selected by a local device or another device in a same or similar state of the communication system and corresponding performance, and these selected decisions are explored decisions.

(3) As shown in FIG. 2, the state of the communication system and outputs of the known model and the historical information of the communication system may be used to train a neural network model, and a trained neural network model may in turn guide selection of a reliable communication decision. For example, after a reliable communication decision is used for the communication system, real performance is obtained. The decision and the real performance may be stored in the historical information, and the neural network model is trained by using the historical information, so that the neural network model outputs estimated performance $X_\theta$ and a reliable exploration coefficient $C_\theta$ corresponding to each decision in a state of the communication system. A quantity $B_\theta$ of times each policy is explored may be obtained through a plurality of iterations of calculation of a neural network. The reliable communication decision is selected based on an output of the neural network.

(4) As shown in FIG. 2, during selection of the reliable communication decision, calculation may be performed according to $Y_\theta = X_\theta + C_\theta \times B_\theta$, to select a decision $\theta$ that can maximize $Y_\theta$. The reliable exploration coefficient $C_\theta$ may be preset, may be obtained through table lookup, may be obtained through calculation based on a current decision exploration status, may be obtained through negotiation between communication devices in a communication process, or may be output by the neural network based on the current state of the communication system. A value of the reliable exploration coefficient $C_\theta$ is used to balance an exploration item and a utilization item, where $X_\theta$ corresponds to the utilization item, and $B_\theta$ corresponds to the exploration item. A balance result is to ensure that performance corresponding to a selected decision is not excessively poor, and to keep performing more exploration on a decision that is little explored.

The foregoing selected reliable communication decision may be a series of decisions. In this case, selecting the reliable communication decision is equivalent to selecting a plurality of steps of consecutive decisions.

The foregoing state of the communication system may be different for different tasks. For example, for a handover task and a pairing task, the state of the communication system may be a location of a terminal. For another example, for a channel coding task, the state of the communication system may be a current code construction.

The foregoing explorable decision is a feasible decision in the current state of the communication system. For example, in a handover task, when a terminal is at a location, there are only two options: handing over to a base station A or handing over to a base station B, and there is no option of handing over to a base station C. In this case, the explorable decision includes only handing over to A or B.

The foregoing model of the communication system can obtain, based on the state of the communication system, the performance corresponding to the decision. For example, the model of the communication system may be a Monte Carlo simulator, a model formula, or a neural network model. The model formula may be different for different tasks. For example, the model formula may be at least one of communication system related calculation formulas such as a channel capacity formula, a signal-to-noise ratio (signal-noise ratio, SNR) formula, an energy efficiency formula, and a spectral efficiency formula.

The foregoing performance of the decision may also be described as performance corresponding to the decision, and is performance of the communication system caused by selection and execution of the decision. The decision may be executed in a simulation environment, so that performance in the corresponding simulation environment is obtained, or may be executed in a real communication network, so that performance in a corresponding real environment is obtained. Likewise, for different tasks, the performance corresponding to the decision may be at least one of communication system related performance indicators such as a channel capacity, a signal-to-noise ratio, energy efficiency, and spectral efficiency.

The foregoing reliable communication decision is a decision finally selected through a plurality of times of exploration. Alternatively, the reliable communication decision may be considered as a to-be-explored decision actually executed in the communication system. A to-be-explored decision is a decision of single-step exploration. A to-be-explored decision may be performed under simulation, but the reliable communication decision is executed in the real communication system.

It should be noted that (1), (2), and (3) described above may be separately performed, or may be performed together in any combination. This is not specifically limited in the embodiments of this application.

Therefore, according to this application, decision exploration may be guided by using the known model in the communication system and/or the historical information and/or the neural network model. In this way, random exploration can be avoided, thereby facilitating reliable running of the communication system.

The following describes in detail a decision selection method provided in this application.

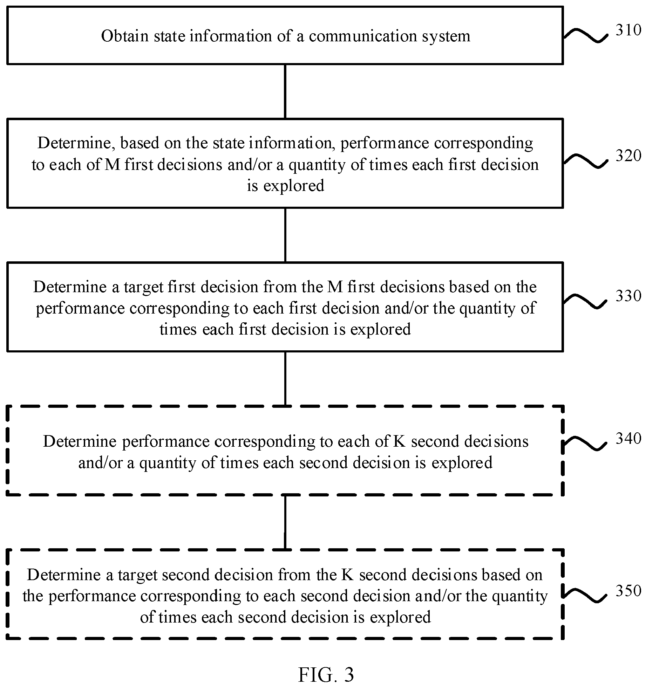

FIG. 3 is a schematic flowchart of a decision selection method according to this application. The method shown in FIG. 3 may include at least part of the following content.

Step 310: Obtain state information of a communication system.

The state information of the communication system is information used to represent a state of the communication system, and may be different for different tasks. For example, for a handover task and a pairing task, the state information may be information about a location of a terminal device. For a power allocation task, the state information may be channel state information of a channel between an access network device and a terminal device. For another example, for a channel coding construction task, the state information may be information about a current code construction.

Step 320: Determine, based on the state information of the communication system, performance corresponding to each of M first decisions and/or a quantity of times each first decision is explored, where M is a positive integer. It should be noted that a quantity of times a decision is explored, a quantity of times a decision is accessed, and a quantity of times a decision is made are not differentiated in this specification.

The M first decisions are decisions that are explorable under the state information. The performance corresponding to the first decision may be arithmetic average performance, weighted average performance, maximum or minimum performance, accumulated performance, or the like of the first decision. This is not specifically limited.

In this application, there are many manners for determining the performance corresponding to each of the M first decisions and/or the quantity of times each first decision is explored. This is not specifically limited in this application. For example, the following manners 1 and 2 may be used for implementation.

Manner 1: Exploration is assisted by using a model of the communication system.

To be specific, a current state of the communication system may be used as an input, and is input to the model of the communication system, and the performance corresponding to each of the M first decisions and/or the quantity of times each first decision is explored are/is determined through calculation of the model of the communication system. For example, the following steps may be cyclically performed N times, to obtain the performance corresponding to each first decision and/or the quantity of times each first decision is explored, where N is an integer greater than 1: selecting a to-be-explored first decision from the M first decisions based on current performance corresponding to each first decision and/or a current quantity of times each first decision is explored; and updating, based on the state information and the model of the communication system, performance corresponding to the to-be-explored first decision, and/or adding 1 to a quantity of times the to-be-explored first decision is explored.

Optionally, the to-be-explored first decision may be selected from the M first decisions based on the current performance corresponding to each first decision and/or the current quantity of times each first decision is explored, and an exploration coefficient of each first decision. The exploration coefficient is used to control a tendency in selection of the first decision, so as to balance exploration, utilization, and reliability. The tendency may be to select more first decisions with small quantities of exploration times, may be to select more first decisions with small quantities of exploration times and good performance, may be to select more first decisions with good performance, or the like. Setting of the exploration coefficient may be different for different tasks or scenarios.

For example, performance and a quantity of exploration times are comprehensively considered. In this case, the to-be-explored first decision is selected from the M first decisions based on the current performance corresponding to each first decision, the current quantity of times each first decision is explored, and the exploration coefficient of each first decision.

In some implementations, the to-be-explored first decision may be selected from the M first decisions based on $y_1 = x_1 + C_1 \cdot b_1$, where a value of $y_1$ corresponding to the to-be-explored first decision is the largest, $x_1$ is a function of the current performance corresponding to each first decision, $C_1$ is the exploration coefficient of each first decision, $C_1$ is a constant, and $b_1$ is a function of a reciprocal of the current quantity of times each first decision is explored. For example, a design in which a classic upper confidence bound (upper confidence boundary, UCB) algorithm and reliable communication are combined may be used. This is referred to as reliable upper confidence bound (R-UCB) exploration in this application. The to-be-explored first decision may be determined from the M first decisions based on the following formula 1:

$$y_1 = X_{1d} + C_1 \cdot \sqrt{\frac{2 \ln N_1}{N_{1d}}} \quad \text{Formula 1}$$

$X_{1d}$ is current performance corresponding to the $d^{th}$ first decision in the M first decisions, N is a current total quantity of times the M first decisions are explored, and $N_{1d}$ is a current quantity of times the $d^{th}$ first decision is explored.

$$C_1 \cdot \sqrt{\frac{2 \ln N_1}{N_{1d}}}$$

$X_{1d}$ is a utilization item, $\qquad\qquad$ is an exploration item, the value of $y_1$ corresponding to the to-be-explored first decision is the largest, $X_{1d}$ is the current performance corresponding to the $d^{th}$ first decision in the M first decisions, $N_1$ is the current total quantity of times the M first decisions are explored, $N_{1d}$ is the current quantity of times the $d^{th}$ first decision is explored, $C_1$ is the exploration coefficient of each first decision, and $C_1$ is a constant. $C_1$ is used to control the tendency in decision selection, or may be understood as changing a ratio of the utilization item to the exploration item. A larger value of $C_1$ indicates that more decisions with small quantities of exploration times are explored during decision selection, and a smaller value of $C_1$ indicates that more decisions with good performance are explored during decision selection.

Manner 2: Exploration is assisted by using historical information.

In some implementations, a communication apparatus may record or store historical decisions of the local device or another device in a same or similar state of the communication system and corresponding performance. When decision exploration needs to be performed, the stored performance corresponding to each of the M first decisions and/or the quantity of times each first decision is explored may be obtained based on the current state of the communication system.

For example, the communication apparatus may store, in a form of a table, historical decisions of the local device or another device in different states of the communication system and corresponding performance. When decision exploration needs to be performed, the performance corresponding to each of the M first decisions and/or the quantity of times each first decision is explored may be obtained through table lookup based on the current state of the communication system.

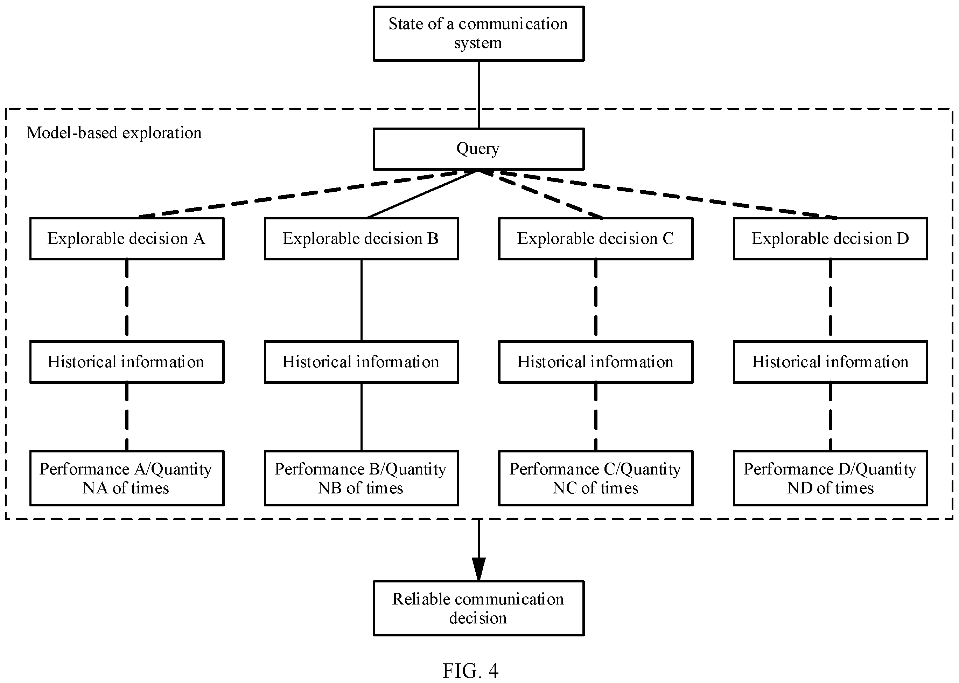

As shown in FIG. 4, different from the manner 1, the manner 2 does not require a plurality of times of single exploration, because the historical information may be considered as that a plurality of times of exploration have been performed historically.

Step 330: Determine a target first decision from the M first decisions based on the performance corresponding to each of the M first decisions and/or the quantity of times each first decision is explored. The target first decision may correspond to the reliable communication decision described above.

There are many manners for determining the target first decision from the M first decisions. This is not specifically limited in this embodiment of this application.

In some implementations, a first decision with best performance may be selected from the M first decisions as the target first decision.

In some other implementations, a first decision with a largest quantity of exploration times may be selected from the M first decisions as the target first decision.

In some other implementations, the target first decision may be selected by comprehensively considering performance and a quantity of exploration times.

Optionally, the target first decision may be selected from the M first decisions based on the performance corresponding to each first decision and/or the quantity of times each first decision is explored, and an exploration coefficient of each first decision. The exploration coefficient is used to control a tendency in selection of the first decision, so as to balance exploration, utilization, and reliability. The tendency may be to select more first decisions with small quantities of exploration times, may be to select more first decisions with small quantities of exploration times and good performance, may be to select more first decisions with good performance, or the like. Setting of the exploration coefficient may be different for different tasks or scenarios.

Specifically, the target first decision may be selected from the M first decisions based on $y_2 = x_2 + C_2 \cdot b_2$, where a value of $y_2$ corresponding to the target first decision is the largest, $x_2$ is a function of the performance corresponding to each first decision, $C_2$ is the exploration coefficient of each first decision, and $b_2$ is a function of a reciprocal of the quantity of times each first decision is explored.

For example, the to-be-explored first decision may be determined from the M first decisions based on the following formula 2:

$$y_2 = X_{2d} + C_2 \cdot \sqrt{\frac{2 \ln N_2}{N_{2d}}} \quad \text{Formula 2}$$

$X_{2d}$ is a utilization item, $C_2 \cdot \sqrt{\dfrac{2 \ln N_2}{N_{2d}}}$ is an exploration item, $X_{2d}$ is performance corresponding to the $d^{th}$ first decision in the M first decisions, $N_2$ is a total quantity of times the M first decisions are explored, $N_{2d}$ is a quantity of times the $d^{th}$ first decision is explored, $C_2$ is the exploration coefficient of each first decision, and $C_2$ is a constant, $C_2$ changes with $N_{2d}$, or $C_2$ is determined by a neural network model. $C_2$ is used to control the tendency in decision selection, or may be understood as changing a ratio of the utilization item to the exploration item. A larger value of $C_2$ indicates that more decisions with small quantities of exploration times are explored during decision selection, and a smaller value of $C_2$ indicates that more decisions with good performance are explored during decision selection.

Optionally, during selection of the reliable communication decision, if $C_2$ is set to change with $N_d$, it may be set that $C_2$ is 0 when $N_d$ is less than a preset threshold. In this way, although some explorable decisions have potential exploratory value, such an explorable decision is not explored, because a quantity of times the decision is explored is excessively small and executing the decision in the communication system may bring an unreliable result to the communication system. This facilitates reliable running of the communication system.

For example, $C_2$ meets the following:

$$C_2 = \begin{cases} C_r > 0 & \text{if } N_{2d} \geq N_t \\ 0 & \text{if } N_{2d} < N_t \end{cases} \quad \text{Formula 3}$$

$N_t$ is the preset threshold, $N_t = \sigma \cdot N_2$, and $\sigma$ is a preset constant. For example, $\sigma$ =0.001. When $N_2$ is 10000, the preset threshold is 10. In other words, for a decision whose quantity of exploration times is less than 10, $C_2$ is 0. Herein, setting of $C_2$ is a stepped design, that is, $C_2$ is 0 or another value. $C_2$ may be alternatively set to change continuously, that is, a value of $C_2$ changes continuously with a value of $N_{2d}$.

In addition, setting of $C_2$ may be different when the communication system uses different exploration manners. For example, when exploration is assisted by using the model of the communication system, $C_2$ is a fixed value; or when the historical information is used as an exploration basis, $C_2$ may be set to a value that changes with $N_{2d}$.

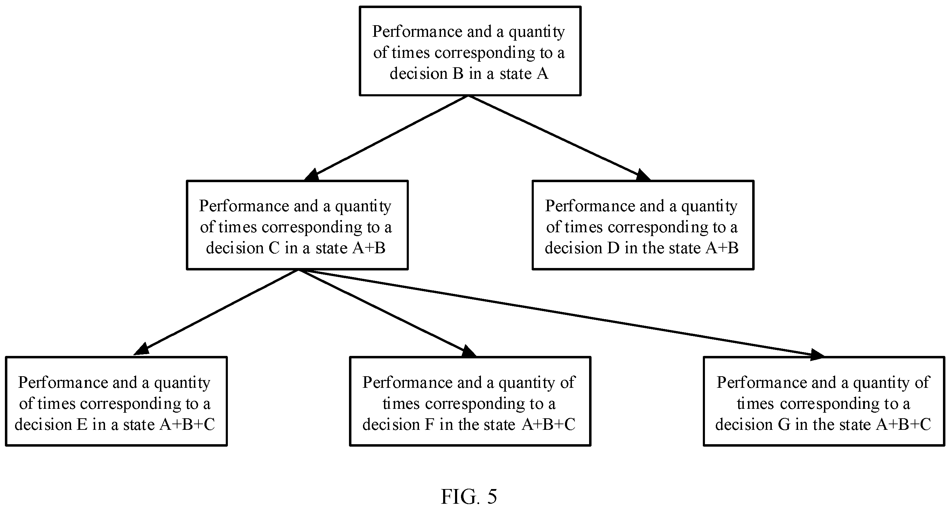

A decision in the communication system is usually a series of decisions rather than a single-step decision. The plurality of steps of decisions may be represented in a tree form. A tree formed by the plurality of steps of decisions may be referred to as a decision tree. Each node in the decision tree may correspond to one explorable decision. In this case, performance corresponding to each node in such a tree structure and a quantity of times each node is explored may be determined by using the model of the communication system or the historical information. Likewise, table lookup exploration may be performed by using a tree-like table in which the historical information is recorded. Performance corresponding to a decision corresponding to a parent node is a sum of performance corresponding to decisions corresponding to all subnodes of the parent node. A quantity of times a decision corresponding to a parent node is explored is a sum of quantities of times decisions corresponding to all subnodes of the parent node are explored. A state of a subnode is a result of selecting, based on a state of a parent node, a decision corresponding to the subnode. For example, in a plurality of steps of decisions shown in FIG. 5, performance corresponding to a decision B in a state A is a sum of performance corresponding to a decision C in a state A+B and performance corresponding to a decision D in the state A+B, and a quantity of times of the decision B in the state A is a sum of a quantity of times of the decision C in the state A+B and a quantity of times of the decision D in the state A+B; the performance corresponding to the decision C in the state A+B is a sum of performance corresponding to a decision E in a state A+B+C, performance corresponding to a decision F in the state A+B+C, and performance corresponding to a decision G in the state A+B+C, and the quantity of times of the decision C in the state A+B is a sum of a quantity of times of the decision E in the state A+B+C, a quantity of times of the decision F in the state A+B+C, and a quantity of times of the decision G in the state A+B+C.

For multi-step exploration, in the foregoing manner 1, the following actions may be further performed: selecting a to-be-explored second decision from K second decisions based on current performance corresponding to each of the K second decisions and/or a current quantity of times each second decision is explored, where the K second decisions are decisions that are explorable after the to-be-explored first decision is selected; updating, based on the state information and the model of the communication system, performance corresponding to the to-be-explored second decision, and/or adding 1 to a quantity of times the to-be-explored second decision is explored; and updating, based on the performance corresponding to the to-be-explored second decision, performance corresponding to the to-be-explored first decision, and/or adding 1 to a quantity of times the to-be-explored first decision is explored. The updating, based on the performance corresponding to the to-be-explored second decision, performance corresponding to the to-be-explored first decision may be understood as adding the performance corresponding to the to-be-explored second decision to the original performance corresponding to the first decision.

The method shown in FIG. 3 may further include step 340 and step 350.

Step 340: Determine performance corresponding to each of the K second decisions and/or a quantity of times each second decision is explored, where the K second decisions are decisions that are explorable after the target first decision is selected, and K is a positive integer.

Step 350: Determine a target second decision from the K second decisions based on the performance corresponding to each second decision and/or the quantity of times each second decision is explored.

A method for determining the target second decision is the same as or similar to a method for determining the target first decision, and reference may be made to the foregoing related descriptions. A difference lies in that a state of the communication system is a state after the target first decision is selected.

It should be noted that FIG. 3 shows only two steps in multi-step exploration, and actually, exploration may be of more steps.

The foregoing describes a method for exploring a decision by using the model of the communication system and the historical information. The following describes a method for decision exploration assisted by a neural network model. When there are a large quantity of single-step explorable decisions and a large quantity of steps of decisions, it may be considered that decision space is very large, that is, a decision tree is wide and deep. In this case, N times of exploration in a similar state have no mechanism of mutual reference and evolution. For example, it is assumed that base stations A, B, and C have similar surrounding base stations and environments. At a same relative location, UE handover status exploration complies with a similar rule. If the base stations A, B, and C separately perform N times of unassociated exploration, it is a waste of resources. According to this application, a neural network model may be used to assist decision exploration and assist exploration space reduction.

In this application, an output of model-based decision exploration may be used to train a neural network model, and a trained neural network model may in turn guide model-based decision exploration. For example, after a reliable communication decision is used for the communication system, real performance is obtained, and the neural network model may be trained based on the reliable communication decision and the performance.

In this way, because the neural network model has been fitted to a plurality of historical exploration results of another device, the neural network model may be used to assist exploration space reduction.

In some implementations, based on the foregoing formula 1 or formula 2, a factor $P_d$ may be added to the exploration item to generalize and prune the decision tree, as shown in a formula 3:

$$y = X_d + C \cdot P_d \sqrt{\frac{2 \ln N}{N_d}} \quad \text{Formula 4}$$

In this case, the exploration coefficient is $C \cdot P_d$, and $P_d$ is output by the neural network model. For ease of description, herein and below, the parameters in both the formula 1 and the formula 2 are described as y, $X_d$, C, N, and $N_d$, and are not distinguished. For specific descriptions, refer to the formula 1 and the formula 2. Details are not described herein again.

In this application, there are many manners for determining various parameters related to or used for decision exploration. This is not specifically limited.

In some implementations, the various parameters used for decision exploration may be determined based on a task type or an application scenario that triggers decision exploration. The various parameters may include at least one of N, C, $C_r$, $\sigma$, or $N_t$.

For example, the communication apparatus may record or store a reliable exploration parameter table, and each parameter is determined through table lookup based on a task type.

Table 1 is an example of the reliable exploration parameter table.

**Table 1**

| Reliable exploration task type | Performance indicator | Parameter $C_r$ | Parameter $\sigma$ | Total quantity N of exploration times |
|---|---|---|---|---|
| 1. Handover | SNR | 1.414 | 0.01 | 1000 |
| 2. UE pairing | Spectral efficiency | 2.5 | 0.001 | 100 |
| 3. Power control | Spectral efficiency | 2.0 | 0.001 | 200 |
| ... | ... | ... | ... | |

Different tasks have different requirements on reliability. For a task that requires higher reliability, $C_r$ should be smaller, so that a weight of an exploration item can be reduced; $\sigma$ should be larger, so that an exploration confidence of a decision with an excessively small quantity of exploration times is not increased; and N should be larger, so that a total quantity of exploration times is large, and a final decision is more accurate. As shown in Table 1, when a task that triggers decision exploration is a handover task, the performance indicator may be the signal-to-noise ratio SNR, a value of $C_r$ is 1.414, a value of $\sigma$ is 0.01, and N is 1000; when a task that triggers decision exploration is a UE pairing task, the performance indicator may be the spectral efficiency, a value of $C_r$ is 2.5, a value of $\sigma$ is 0.001, and N is 100; when a task that triggers decision exploration is a power control task, the performance indicator may be the spectral efficiency, a value of $C_r$ is 2.0, a value of $\sigma$ is 0.001, and N is 200; and so on.

The following describes the foregoing method in detail with reference to specific examples.

Example 1

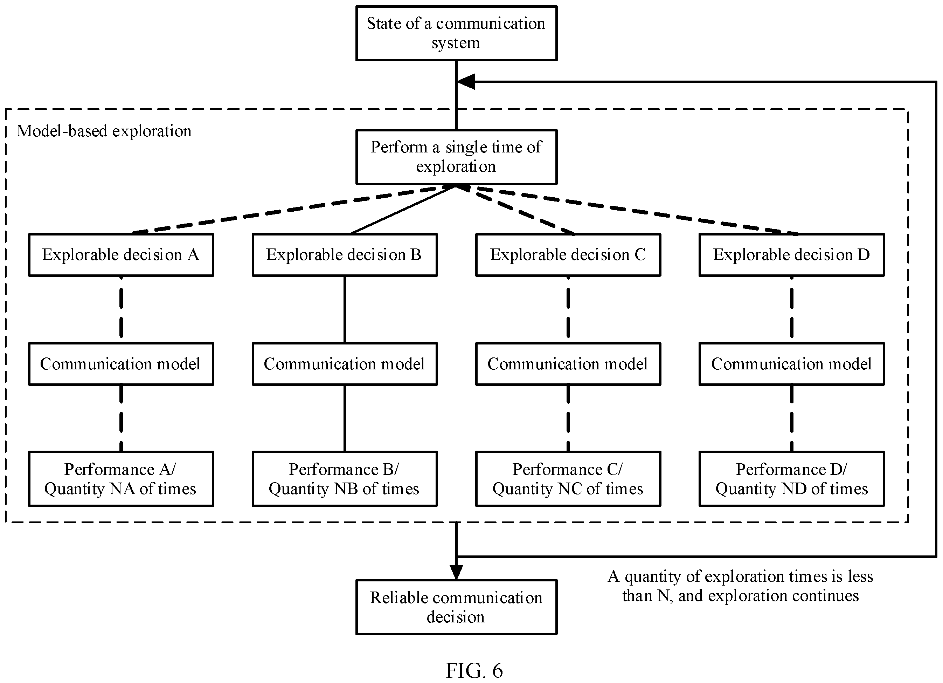

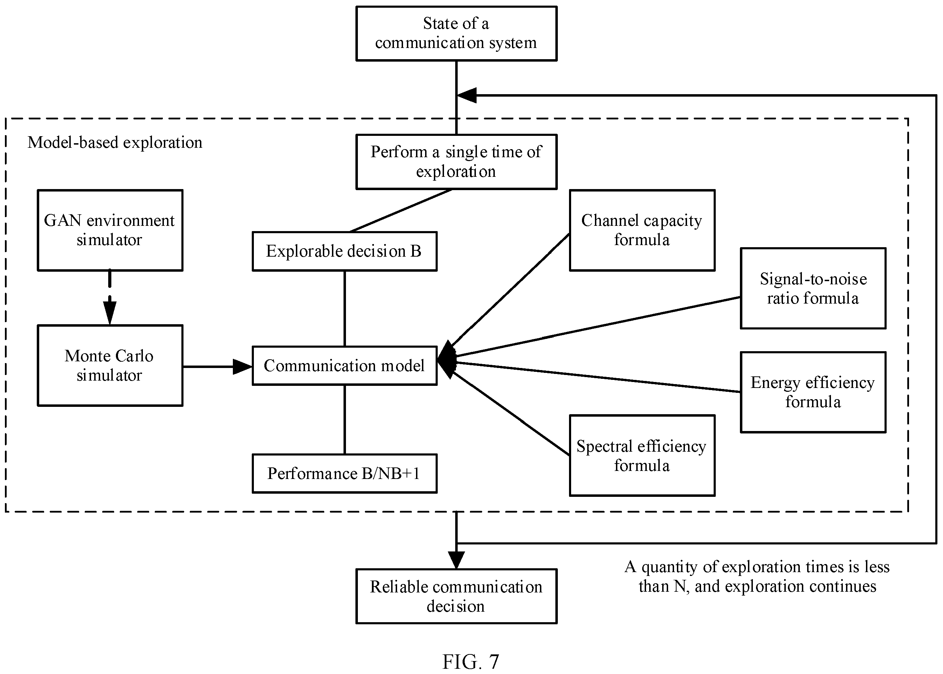

FIG. 6 and FIG. 7 show examples of exploration assisted by using the model of the communication system.

To output a reliable communication decision, model-based exploration needs to simulate, before output, as many performance gains brought by execution of various decisions as possible, and finally output the reliable communication decision based on these simulation results. Certainly, a large quantity of simulation times also causes an increase in consumption of system resources. In this case, a trade-off needs to be made. It is assumed that, in model-based exploration, N times of exploration are simulated before each time of decision making. One explorable decision (which may correspond to the foregoing to-be-explored first decision) is selected in each time of exploration, estimated performance corresponding to the explorable decision is obtained based on an input state of the communication system and the selected explorable decision by using the model of the communication system, the estimated performance is added to accumulated performance corresponding to the explorable decision selected in an exploration process, and a quantity of times the explorable decision has been selected in the N times of exploration is recorded. After exploration is performed N times, an explorable decision with a largest quantity of access times may be output as a reliable communication decision, or a reliable communication decision may be selected by comprehensively considering performance and a quantity of access times.

For example, as shown in FIG. 6, in the current state of the communication system, there are explorable decisions A, B, C, and D. The explorable decision B is selected in a time of exploration. Through analysis of the model of the communication system, estimated performance corresponding to the explorable decision B is output. The obtained estimated performance is added to performance B, and then 1 is added to a quantity NB of access times.

Specifically, as shown in FIG. 7, after the explorable decision B is selected, system performance caused by selection of the explorable decision B in the current state of the communication system may be calculated by using a communication formula such as a channel capacity formula, a signal-to-noise ratio formula, an energy efficiency formula, or a spectral efficiency formula; or performance corresponding to the explorable decision B in a general scenario (for example, a Rayleigh channel) may be simulated by using a Monte Carlo simulator; or a generative adversarial network (generative adversarial networks, GAN) may be used as a scenario simulator to simulate a specific communication scenario, so as to obtain, in combination with a simulator, performance corresponding to the explorable decision B for the current state of the communication system in the specific scenario.

It can be learned from FIG. 6 and FIG. 7 that a manner of selecting an explorable decision in a single time of exploration is not random (which may be random in the first time of exploration), and a decision needs to be selected based on accumulated performance corresponding to each explorable decision and a quantity of access times of each explorable decision.

Example 2

Table 2 is used as an example to describe how to explore and output a reliable decision by using a table lookup method based on the historical information.

In this case, because a quantity of access times is not obtained through a plurality of times of exploration in model-based exploration, a reliable decision cannot be selected based on a largest quantity of access times. Instead, an explorable decision with best average performance should be selected, or a reliable communication decision may be selected by comprehensively considering performance and a quantity of exploration times.

For example, the reliable communication decision is selected by comprehensively considering performance and a quantity of exploration times. In Table 2, B and D in explorable decisions A, B, C, and D correspond to better average performance, and quantities of times B and D are explored are small, where D is explored a smaller quantity of times and is more worth exploring. Quantities of historical exploration times of explorable decisions E and F are excessively small. Based on the foregoing formulas 1 and 2, exploration items of the explorable decisions E and F may be zero. Finally, it is determined, by using the foregoing formulas 1 and 2, that a decision that maximizes a value of y is the explorable decision D, and therefore the explorable decision D is output.

It should be noted that the classical UCB algorithm selects the explorable decision F. Because the explorable decision F has not been explored, a value of a UCB formula is infinite. Therefore, the classical UCB algorithm is also considered as an optimistic algorithm. However, in reliable communication, such blind optimism may cause system breakdown. Therefore, the formula needs to be limited.

**Table 2**

| State of the communication system: UE location | Performance: average SNR | Quantity of exploration times |
|---|---|---|
| Explorable decision A: no handover | 5 | 1000 |
| Explorable decision B: handover to a base station x | 10 | 100 |
| Explorable decision C: handover to a base station y | 8 | 500 |
| Explorable decision D: handover to a base station z | 10 | 10 |
| Explorable decision E: handover to a base station w | 8 | 1 |
| Explorable decision F: handover to a base station h | ? | 0 |

Example 3

Multi-step exploration performed by using a table lookup method of historical information is described with reference to Table 3.

It is assumed that a task is a UE pairing task, and three UEs need to be selected from six UEs. A "tree-like communication policy value table" in the state A is shown in Table 3.

**Table 3**

| State A: six UE locations | | | Performance: spectral efficiency (bit/s/Hz) | Quantity of times | Utilization item $X_d$ |
|---|---|---|---|---|---|
| Decision B: select UE1 | | | 10200 | 410 | 25.6 |
| | Decision C: select UE2 | | 10000 | 400 | 25 |
| | | Decision E: select UE3 | 5000 U:5040 | 100 U:101 | 50 U:49.9 |
| | | Decision F: select UE4 | 2000 | 200 | 10 |
| | | Decision G: select UE5 | 3000 | 100 | 30 |
| | Decision D: select UE6 | | 200 | 10 | 20 |
| | | Decision H: select UE3 | 200 | 10 | 20 |

After multi-step exploration is performed based on the formulas 1 to 4, the plurality of steps of decisions in an order of B, C, and E are selected with a higher probability, that is, the user 1, the user 2, and the user 3 are selected for pairing.

Example 4

This example is an example of applying the method in this application to a channel coding scenario.

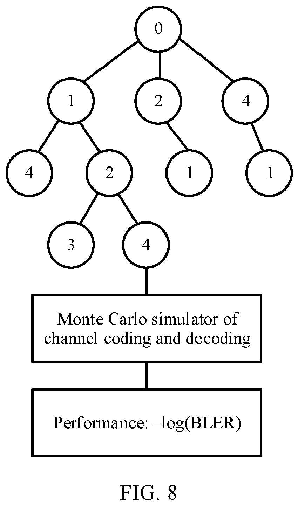

Exploration of a nested (nested) code construction of a polar code (polar code) is a decision tree with large space. In this case, the model of the communication system may be a Monte Carlo simulator of channel coding and decoding, the performance indicator may be -log(BLER), and the neural network model may be used for generalization and pruning of the decision tree. As shown in FIG. 8, 0, 1, 2, 3, and 4 are reliability sorting location indications of a polar nested code construction. As a code length increases, the tree becomes deeper and wider. Herein, only a partial decision tree of one polar code nested construction is used as an example. It is assumed that 0 is known as a most reliable information bit location, and 0 is directly determined as a parent node. Then, a location of a next information bit may have a plurality of selections, corresponding to a plurality of subnodes. In this case, performance corresponding to each subnode may be obtained through Monte Carlo simulation. In this example, performance corresponding to each of sequences 0→1, 0→2, and 0→4 is separately simulated. Based on the obtained simulated performance corresponding to each subnode, it is found that performance corresponding to a route 0→1 is best. Subsequently, during selection of a decision under 1, performance corresponding to 0→1→4 is compared with performance corresponding to 0→1→2. It is found that the performance corresponding to 0→1→2 is better. The performance corresponding to 0→1→2 and the performance corresponding to 0→1→4 are added to a parent node 1. It should be noted that the performance corresponding to 0→1 being better than performance corresponding to 0→2 does not mean that the performance corresponding to 0→1→2 is definitely better than performance corresponding to 0→2→1. To achieve best overall performance corresponding to a final long sequence, that is, to find a route with best average performance, decisions under a parent node 2 also need to be explored. During selection for decision exploration from the parent node 1 and the parent node 2, an indicator used as a basis is the foregoing method for balancing exploration and utilization.

Example 5

As shown in Table 4, overheads of transmitting a reliable exploration parameter on signaling are comparatively large. To reduce signaling overheads, a mapping table may be designed and standardized, and each reliable exploration level in the table corresponds to one set of reliable exploration parameters. In this way, a receive end and a transmit end store the same mapping table, and when a reliable exploration parameter is transmitted by using signaling, the transmit end may send only a sequence number of a reliable exploration level, so that the receive end can obtain a corresponding reliable exploration parameter.

Likewise, to reduce signaling overheads, as shown in Table 5, for some specific tasks, a mapping table of tasks, reliable exploration levels, and performance indicators may be preset. In this way, during exploration of a task, the receive end and the transmit end do not need to transmit a reliable exploration level and a performance indicator, but perform exploration by using a parameter corresponding to the task in the table.

Table 4 and Table 5 are examples of an initial reliable exploration level table.

**Table 4**

| Reliable exploration level | Parameter $\sigma$ | Total quantity N of exploration times |
| --- | --- | --- |
| Level 0 | 0.01 | 10000 |
| Level 1 | 0.001 | 1000 |
| Level 2 | 0.0001 | 100 |
| ... | ... | |

**Table 5**

| Reliable exploration | Performance indicator | Reliable exploration level |
| --- | --- | --- |
| 1. Handover | SNR | Level 0 |
| 2. UE pairing | Spectral efficiency | Level 1 |
| 3. Power control | Spectral efficiency | Level 2 |
| ... | ... | ... |

It should be noted that the method shown in FIG. 3 to FIG. 8 may be performed by a terminal, an access network device, or a core network device, or may be performed by a module or unit (for example, a chip, a circuit, or a system on chip (system on chip, SOC)) in a terminal, an access network device, or a core network device. The following provides descriptions by using an example in which the method is performed by a terminal, an access network device, or a core network device.

In this application, the terminal, the access network device, and the core network device may exchange a decision exploration table, a multi-step decision exploration table, a reliable exploration parameter table, a neural network parameter used for reliable exploration, and the like with each other. (1) A decision is selected by the terminal.

In other words, the method shown in FIG. 3 to FIG. 8 is performed by the terminal.

Using a handover task as an example, the access network device needs to assist the terminal in exploring for better performance on the handover task, and therefore, the access network device should perform inquiry and authentication (for a VIP customer) on a reliable exploration capability of the terminal. The terminal has a specific requirement on task reliability of the terminal. For exploration parameter setting, the access network device should inquire a specific setting of the terminal. For a high-value terminal within a coverage area of the access network device, the access network device may register a reliable exploration permission with the core network device for the high-value terminal. For example, a terminal that frequently appears in the coverage area of the access network device greatly helps effective continuous exploration, and a reliable exploration permission may be registered for such a terminal, so as to assist the access network device in improving reliable exploration performance and accumulating experience.

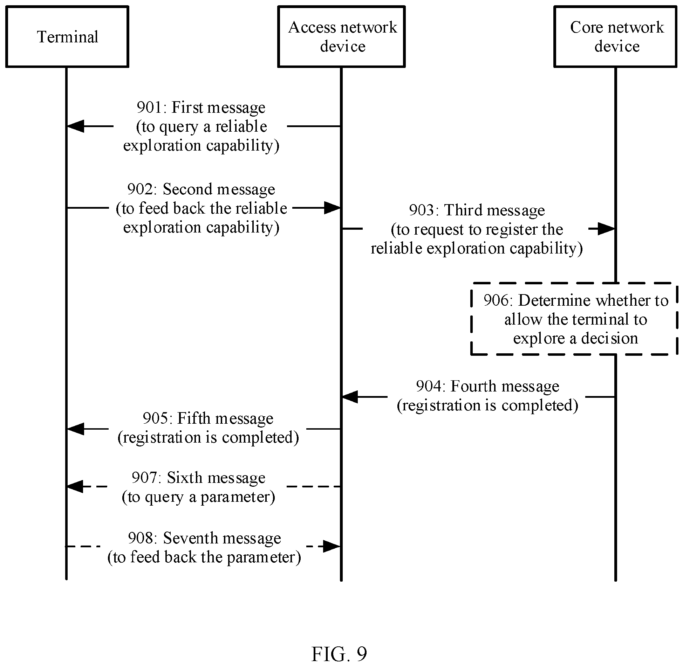

FIG. 9 is a schematic flowchart of registering a reliable exploration capability with a core network device for a terminal. Step 901: An access network device sends a first message to the terminal, to query a reliable exploration capability of the terminal. Correspondingly, the terminal receives the first message from the access network device.

The reliable exploration capability herein may be understood as whether the decision selection method shown in FIG. 3 to FIG. 8 is supported.

Optionally, the first message may be a system information block (system information block, SIB) or master information block (master information block, MIB) message. The first message may include at least one of a ueCapability field, a reliableSearchFlg field, or a reliableLevel field.

Step 902: The terminal sends a second message to the access network device, to feed back the reliable exploration capability of the terminal to the access network device. Correspondingly, the access network device receives the second message from the terminal.

Step 903: If the terminal feeds back that the terminal has the reliable exploration capability, the access network device sends a third message to the core network device, to request to register the reliable exploration capability for the terminal. Correspondingly, the core network device receives the third message from the access network device.

Step 904: The core network device completes registration, and sends a fourth message to the access network device, to indicate that the reliable exploration capability is registered. Correspondingly, the access network device receives the fourth message sent by the core network device.

Step 905: The access network device sends a fifth message to the terminal, to indicate that the reliable exploration capability is registered. Correspondingly, the terminal receives the fifth message sent by the access network device. In this way, the reliable exploration capability is registered with the core network device for the terminal. Optionally, the core network device may further perform authentication on the reliable exploration capability of the terminal, to determine whether to allow the terminal to explore a decision. In other words, before step 904, step 906 may be further performed. Step 904 is performed only when the core network device allows the terminal to explore a decision. Otherwise, a registration exception or a registration failure is fed back to the terminal.

Optionally, the access network device may further query, from the terminal, a parameter used for decision exploration, so that the access network device estimates a time needed for decision exploration, to perform proper processing. Specifically, steps 907 and 908 may be performed.

Step 907: The access network device sends a sixth message to the terminal, to query the parameter used for decision exploration.

Step 908: After receiving the sixth message, the terminal may send a seventh message to the access network device, to feed back the parameter used for decision exploration.

In some implementations, the terminal may obtain, from the access network device, at least some of the parameter, a model of a communication system, and historical information that are needed for decision exploration. For example, the terminal may obtain the foregoing content from the access network device in the process shown in FIG. 9. (2) A decision is selected by the access network device.

In other words, the method shown in FIG. 3 to FIG. 8 is performed by the access network device.

Step 1001: A terminal sends an eighth message to an access network device, to request to start decision exploration. Correspondingly, the access network device receives the eighth message sent by the terminal.

Optionally, the eighth message may include at least one of a task type that triggers decision exploration, a model of a communication system, a neural network model parameter, or the like. For example, for a handover task, a reliable exploration task list of the eighth message includes the handover task, and a reliable exploration performance indicator includes a communication formula, a simulator type, and the like.

Step 1002: The access network device sends a ninth message to the terminal, to feedback, to the terminal, that decision exploration starts.

Step 1003: The access network device performs decision exploration according to the method shown in FIG. 3 to FIG. 8, and sends an exploration result to the terminal. Correspondingly, the terminal receives the exploration result sent by the access network device.

It should be noted that, for multi-step exploration, a manner of feeding back the exploration result by the access network device is not limited in this application. For example, the access network device may send all exploration results to the terminal at a time after multi-step exploration ends. For another example, the access network device may send one exploration result to the terminal each time one step of exploration is performed, and send results of multi-step exploration to the terminal by using a plurality of messages.

Step 1004: After receiving the needed exploration result, the terminal sends a tenth message to the access network device, to request to end multi-step exploration. Correspondingly, the access network device receives the tenth message sent by the terminal.

Step 1005: The access network device sends an eleventh message to the terminal, to notify the terminal that decision exploration ends.

In some implementations, the access network device may obtain, from another access network device or a core network device based on a task type, support information related to decision exploration, for example, a simulator and a simulation condition needed for a communication model, and historical information for a same type of task.

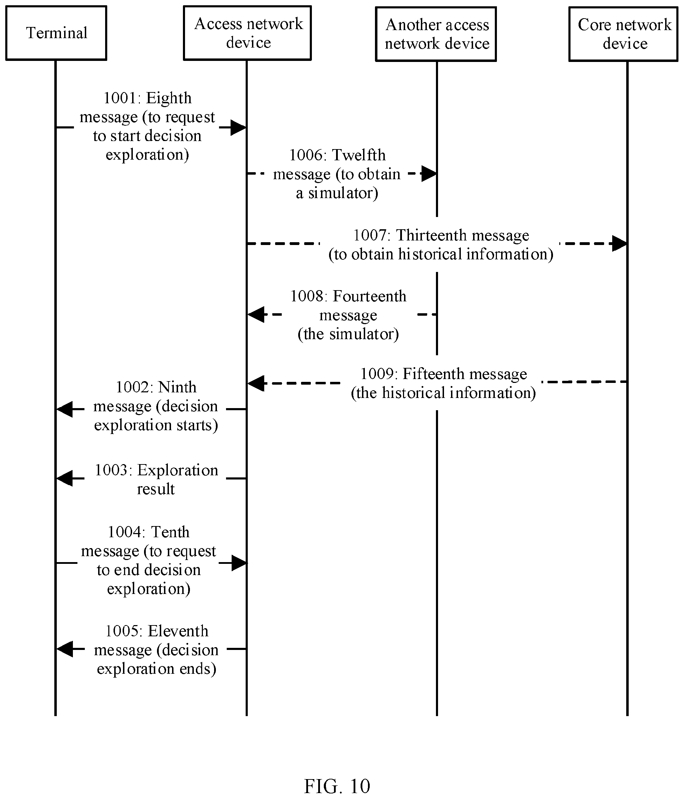

An example is shown in FIG. 10:

Step 1006: After receiving the eighth message sent by the terminal, the access network device may send a twelfth message to another access network device, to obtain the simulator, the simulation condition, and the like needed for the communication model.

Step 1007: After receiving the eighth message sent by the terminal, the access network device may send a thirteenth message to another core network device, to obtain the historical information for the same type of task.

Step 1008: After receiving the twelfth message, the another access network device sends a fourteenth message to the access network device, to feed back the simulator, the simulation condition, and the like needed for the communication model.

Step 1009: After receiving the thirteenth message, the core network device sends a fifteenth message to the access network device, to feed back the historical information for the same type of task.

It can be understood that, to implement the functions in the foregoing embodiments, the terminal, the access network device, and the core network device include corresponding hardware structures and/or software modules for performing the functions. A person skilled in the art should be easily aware that, in combination with the units and the method steps in the examples described in the embodiments disclosed in this application, this application can be implemented by using hardware or a combination of hardware and computer software. Whether a function is performed by using hardware or hardware driven by computer software depends on particular application scenarios and design constraints of the technical solutions.

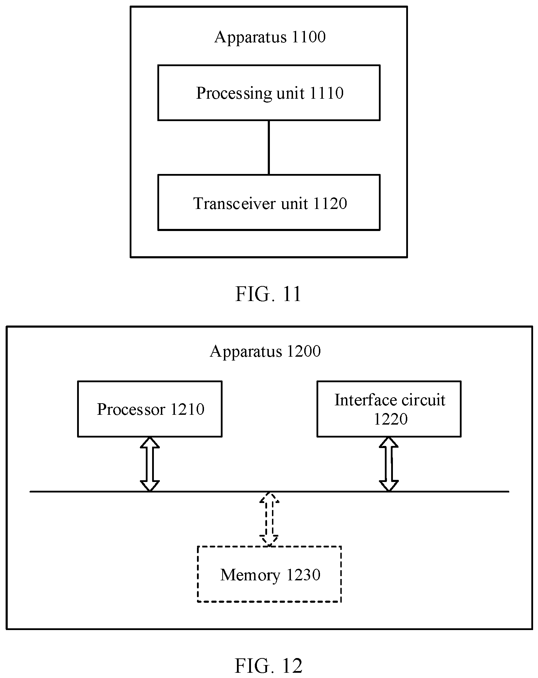

FIG. 11 and FIG. 12 are schematic diagrams of structures of possible decision selection apparatuses according to embodiments of this application. These apparatuses may be configured to implement functions of the terminal, the access network device, or the core network device in the foregoing method embodiments, and therefore can also achieve the beneficial effects of the foregoing method embodiments. In the embodiments of this application, the decision selection apparatus may be the terminal 120 or the terminal 130 shown in FIG. 1, may be the radio access network device 110 shown in FIG. 1, may be a core network device, or may be a module (for example, a chip) applied to a terminal, an access network device, or a core network device.

As shown in FIG. 11, the apparatus 1100 includes a processing unit 1110 and a transceiver unit 1120.

When the apparatus 1100 is configured to implement a function of a terminal, the processing unit 1110 may be configured to perform steps 310 to 350, and the transceiver unit 1120 may be configured to perform steps 901 and 902, 905, 907 and 908, and 1001 to 1005.

When the apparatus 1100 is configured to implement a function of an access network device, the processing unit 1110 may be configured to perform steps 310 to 350, and the transceiver unit 1120 may be configured to perform steps 901 to 905, 907 and 908, 1001, and 1006 to 1009.

When the apparatus 1100 is configured to implement a function of a core network device, the processing unit 1110 may be configured to perform step 906, and the transceiver unit 1120 may be configured to perform steps 903 and 904, 1007, and 1009.

For more detailed descriptions about the processing unit 1110 and the transceiver unit 1120, directly refer to related descriptions in the method embodiments. Details are not described herein again.

As shown in FIG. 12, the apparatus 1200 includes a processor 1210 and an interface circuit 1220. The processor 1210 and the interface circuit 1220 are coupled to each other. It can be understood that the interface circuit 1220 may be a transceiver or an input/output interface. Optionally, the apparatus 1200 may further include a memory 1230, configured to store instructions executed by the processor 1210, or store input data needed by the processor 1210 to run instructions, or store data generated after the processor 1210 runs instructions.

When the apparatus 1200 is configured to implement the method in the method embodiments, the processor 1210 is configured to perform a function of the processing unit 1110, and the interface circuit 1220 is configured to perform a function of the transceiver unit 1120.

When the apparatus is a chip applied to a terminal, the terminal chip implements functions of the terminal in the foregoing method embodiments. For example, the terminal chip receives information from another module (for example, a radio frequency module or an antenna) in the terminal, where the information is sent by another device to the terminal; or the terminal chip sends information to another module (for example, a radio frequency module or an antenna) in the terminal, where the information is sent by the terminal to another device.

When the apparatus is a chip applied to an access network device, the access network device chip implements functions of the access network device in the foregoing method embodiments. For example, the access network device chip receives information from another module (for example, a radio frequency module or an antenna) in the access network device, where the information is sent by another device to the access network device; or the access network device chip sends information to another module (for example, a radio frequency module or an antenna) in the access network device, where the information is sent by the access network device to another device.

It can be understood that the processor in the embodiments of this application may be a central processing unit (Central Processing Unit, CPU), or may be another general purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a transistor logic device, a hardware component, or any combination thereof. The general purpose processor may be a microprocessor, or may be any conventional processor.

The method steps in the embodiments of this application may be implemented by using hardware, or may be implemented by the processor by executing software instructions. The software instructions may include a corresponding software module. The software module may be stored in a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well known in the art. An example of a storage medium is coupled to the processor, so that the processor can read information from the storage medium and can write information into the storage medium. Certainly, the storage medium may alternatively be a constituent part of the processor. The processor and the storage medium may be located in an ASIC. In addition, the ASIC may be located in the terminal, the access network device, or the core network device. Certainly, the processor and the storage medium may alternatively exist as discrete components in the terminal, the access network device, or the core network device. All or some of the foregoing embodiments may be implemented by using software, hardware, firmware, or any combination thereof. When software is used for implementation, all or some of the embodiments may be implemented in a form of a computer program product. The computer program product includes one or more computer programs or instructions. When the computer program or instruction is loaded and executed on a computer, all or some of the procedures or functions in the embodiments of this application are executed. The computer may be a general-purpose computer, a dedicated computer, a computer network, or another programmable apparatus. The computer program or instruction may be stored in a computer-readable storage medium, or may be transmitted through the computer-readable storage medium. The computer-readable storage medium may be any usable medium accessible by a computer, or a data storage device such as a server integrating one or more usable media. The usable medium may be a magnetic medium, for example, a floppy disk, a hard disk, or a magnetic tape, may be an optical medium, for example, a DVD, or may be a semiconductor medium, for example, a solid-state drive (solid state disk, SSD).

In the embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

In this application, "at least one" means one or more, and "a plurality of" means two or more. The term "and/or" describes an association relationship for describing associated objects and represents that three relationships may exist. For example, A and/or B may represent the following three cases: Only A exists, both A and B exist, and only B exists. A and B each may be singular or plural. In the text descriptions of this application, the character "/" generally indicates an "or" relationship between associated objects. In a formula in this application, the character "/" indicates a "division" relationship between associated objects.

It can be understood that various numbers in the embodiments of this application are merely intended for differentiation for ease of description, and are not intended to limit the scope of the embodiments of this application. Sequence numbers of the foregoing processes do not mean execution sequences, and the execution sequences of the processes should be determined based on functions and internal logic of the processes.

It can be clearly understood by a person skilled in the art that, for ease and brevity of description, for specific working processes of the foregoing system, apparatus, and unit, reference may be made to corresponding processes in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or may be integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate components may or may not be physically separate, and components displayed as units may or may not be physical units, may be located in one position, or may be distributed on a plurality of network units. Some or all of the units may be selected based on an actual requirement to achieve the objectives of the solutions in the embodiments.

In addition, functional units in the embodiments of this application may be integrated into one processing unit, or each of the units may exist alone physically, or two or more units may be integrated into one unit.

When the function is implemented in a form of a software function unit and is sold or used as an independent product, the function may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A decision selection method, comprising:

   obtaining state information of a communication system;
   determining, based on the state information, performance corresponding to each of M first decisions and/or a quantity of times each first decision is explored, wherein the M first decisions are decisions that are explorable under the state information, and M is a positive integer; and
   determining a target first decision from the M first decisions based on the performance corresponding to each first decision and/or the quantity of times each first decision is explored.

2. The method according to claim 1, wherein the method further comprises:

   determining performance corresponding to each of K second decisions and/or a quantity of times each second decision is explored, wherein the K second decisions are decisions that are explorable after the target first decision is selected, and K is a positive integer; and
   determining a target second decision from the K second decisions based on the performance corresponding to each second decision and/or the quantity of times each second decision is explored.

3. The method according to claim 1 or 2, wherein the determining, based on the state information, performance corresponding to each of M first decisions and/or a quantity of times each first decision is explored comprises:

   cyclically performing the following steps N times, to obtain the performance corresponding to each first decision and/or the quantity of times each first decision is explored, wherein N is an integer greater than 1;
   selecting a to-be-explored first decision from the M first decisions based on current performance corresponding to each first decision and/or a current quantity of times each first decision is explored; and
   updating, based on the state information and a model of the communication system, performance corresponding to the to-be-explored first decision; and/or adding 1 to a quantity of times the to-be-explored first decision is explored.

4. The method according to claim 3, wherein the method further comprises:

   selecting a to-be-explored second decision from the K second decisions based on current performance corresponding to each of the K second decisions and/or a current quantity of times each second decision is explored, wherein the K second decisions are decisions that are explorable after the to-be-explored first decision is selected;
   updating, based on the state information and the model of the communication system, performance corresponding to the to-be-explored second decision; and/or adding 1 to a quantity of times the to-be-explored second decision is explored; and
   updating, based on the performance corresponding to the to-be-explored second decision, the performance corresponding to the to-be-explored first decision; and/or adding 1 to the quantity of times the to-be-explored first decision is explored.

5. The method according to claim 3 or 4, wherein the selecting a to-be-explored first decision from the M first decisions based on current performance corresponding to each first decision and/or a current quantity of times each first decision is explored comprises:
   selecting the to-be-explored first decision from the M first decisions based on the current performance corresponding to each first decision and/or the current quantity of times each first decision is explored, and an exploration coefficient of each first decision, wherein the exploration coefficient is used to control a tendency in decision selection.

6. The method according to claim 5, wherein the selecting the to-be-explored first decision from the M first decisions based on the current performance corresponding to each first decision and/or the current quantity of times each first decision is explored, and an exploration coefficient of each first decision comprises:
selecting the to-be-explored first decision from the M first decisions based on $y_1 = x_1 + C_1 \cdot b_1$, wherein a value of $y_1$ corresponding to the to-be-explored first decision is the largest, $x_1$ is a function of the current performance corresponding to each first decision, $C_1$ is the exploration coefficient of each first decision, $C_1$ is a constant, and $b_1$ is a function of a reciprocal of the current quantity of times each first decision is explored.

7. The method according to claim 6, wherein the selecting the to-be-explored first decision from the M first decisions based on $y_1 = x_1 + C_1 \cdot b_1$ comprises:

$$y_1 = X_{1d} + C_1 \cdot \sqrt{\frac{2\ln N_1}{N_{1d}}}$$

determining the to-be-explored first decision from the M first decisions based on , wherein $X_{1d}$ is current performance corresponding to the $d^{th}$ first decision in the M first decisions, $N_1$ is a current total quantity of times the M first decisions are explored, and $N_{1d}$ is a current quantity of times the $d^{th}$ first decision is explored.

8. The method according to claim 1 or 2, wherein the determining, based on the state information, performance corresponding to each of M first decisions and/or a quantity of times each first decision is explored comprises:
determining, based on the state information and historical information, the performance corresponding to each first decision and/or the quantity of times each first decision is explored, wherein the historical information comprises performance corresponding to each first decision and/or a quantity of times each first decision is explored under the state information.

9. The method according to any one of claims 1 to 8, wherein the determining a target first decision from the M first decisions based on the performance corresponding to each first decision and/or the quantity of times each first decision is explored comprises:
determining the target first decision from the M first decisions based on the performance corresponding to each first decision and/or the quantity of times each first decision is explored, and an exploration coefficient of each first decision, wherein the exploration coefficient is used to control a tendency in decision selection.

10. The method according to claim 9, wherein the selecting the target first decision from the M first decisions based on the performance corresponding to each first decision and/or the quantity of times each first decision is explored, and an exploration coefficient of each first decision comprises:
selecting the target first decision from the M first decisions based on $y_2 = x_2 + C_2 \cdot b_2$, wherein a value of $y_2$ corresponding to the target first decision is the largest, $x_2$ is a function of the performance corresponding to each first decision, $C_2$ is the exploration coefficient of each first decision, and $b_2$ is a function of a reciprocal of the quantity of times each first decision is explored.

11. The method according to claim 10, wherein the selecting the target first decision from the M first decisions based on $y_2 = x_2 + C_2 \cdot b_2$ comprises:

$$y_2 = X_{2d} + C_2 \cdot \sqrt{\frac{2\ln N_2}{N_{2d}}}$$

determining the target first decision from the M first decisions based on , wherein $X_{2d}$ is performance corresponding to the $d^{th}$ first decision in the M first decisions, $N_2$ is a total quantity of times the M first decisions are explored, $N_{2d}$ is a quantity of times the $d^{th}$ first decision is explored, and $C_2$ is a constant, $C_2$ changes with $N_{2d}$, or $C_2$ is determined by a neural network model.

12. The method according to claim 11, wherein if $C_2$ changes with $N_{2d}$, $C_2$ is 0 when $N_{2d}$ is less than a preset threshold.

$$C_2 = \begin{cases} C_r > 0 & \text{if } N_{2d} \geq N_t \\ 0 & \text{if } N_{2d} < N_t \end{cases}$$

13. The method according to claim 12, wherein $C_2$ meets , $N_t$ is the preset threshold,

$N_t = \sigma \cdot N_2$, and $\sigma$ is a preset constant.

14. The method according to claim 13, wherein the method further comprises:
training the neural network model based on the state information and the target first decision, wherein the neural network model is used to output $C_r$.

15. The method according to claim 13 or 14, wherein the method further comprises:
obtaining a parameter used for decision exploration, wherein the parameter comprises at least one of a performance indicator, $N_2$, $C_2$, $C_r$, $\sigma$, or $N_t$.

16. The method according to claim 15, wherein the obtaining a parameter used for decision exploration comprises:
obtaining the parameter based on a task type.

17. The method according to any one of claims 1 to 16, wherein the method further comprises:
obtaining support information, wherein the support information is used to determine performance corresponding to the first decision, the support information comprises at least one of a simulator of the model of the communication system, a simulation condition of the model of the communication system, or historical information of the communication system, and the historical information comprises performance corresponding to each decision and/or a quantity of times each decision is explored in different states of the communication system.

18. The method according to any one of claims 13 to 16, wherein the method further comprises:

receiving a sixth message sent by an access network device, wherein the sixth message is used to query the parameter used for decision exploration, and the parameter comprises at least one of $N_2$, $C_2$, $C_r$, $\sigma$, or $N_t$; and
sending a seventh message to the access network device, wherein the seventh message is used to indicate the parameter.

19. The method according to any one of claims 1 to 18, wherein the method further comprises:

receiving a first message sent by the access network device, wherein the first message is used to query whether a decision exploration capability is provided;
sending a second message to the access network device, wherein the second message is used to indicate that the decision exploration capability is provided; and
receiving a fifth message sent by the access network device, wherein the fifth message is used to indicate that the decision exploration capability is registered with a core network device.

20. The method according to any one of claims 1 to 17, wherein the method further comprises:

receiving an eighth message sent by a terminal, wherein the eighth message is used to request to start decision exploration;
sending an exploration result to the terminal, wherein the exploration result comprises information about the target first decision; and
receiving a tenth message sent by the terminal, wherein the tenth message is used to request to end decision exploration.

21. A decision selection method, comprising:

sending a first message to a terminal, wherein the first message is used to query whether a decision exploration capability is provided;
receiving a second message sent by the terminal, wherein the second message is used to indicate that the decision exploration capability is provided;
sending a third message to a core network device, wherein the third message is used to request to register the decision exploration capability;
receiving a fourth message sent by the core network device, wherein the fourth message is used to indicate that the decision exploration capability is registered; and
sending a fifth message to the terminal, wherein the fifth message is used to indicate that the decision exploration capability is registered with the core network device.

22. The method according to claim 21, wherein the method further comprises:

sending a sixth message to the terminal, wherein the sixth message is used to query a parameter used for decision exploration;
receiving a seventh message sent by the terminal, wherein the seventh message is used to indicate the parameter; and
estimating a decision exploration time based on the parameter.

23. The method according to claim 21 or 22, wherein the method further comprises:
sending support information to the terminal, wherein the support information comprises at least one of a simulator of a model of a communication system, a simulation condition of the model of the communication system, or historical information of the communication system, and the historical information comprises performance corresponding to each decision and/or a quantity of times each decision is explored in different states of the communication system.

24. A decision selection method, comprising:

sending an eighth message to an access network device, wherein the eighth message is used to request to start decision exploration;
receiving an exploration result sent by the access network device; and
sending a tenth message to the access network device, wherein the tenth message is used to request to end decision exploration.

25. A decision selection method, comprising:

receiving a thirteenth message sent by an access network device, wherein the thirteenth message is used to request historical information, and the historical information comprises performance corresponding to each decision and/or a quantity of times each decision is explored in different states of a communication system; and
sending a fifteenth message to the access network device, wherein the fifteenth message is used to indicate the historical information.

26. The method according to claim 25, wherein the method further comprises:

receiving a third message sent by the access network device, wherein the third message is used to request to register a decision exploration capability for a terminal; and
sending a fourth message to the access network device, wherein the fourth message is used to indicate that the decision exploration capability is registered.

27. The method according to claim 25 or 26, wherein before the sending a fourth message to the access network device, the method further comprises:
determining to allow the terminal to explore a decision.

28. A communication apparatus, wherein the apparatus comprises:
a processing unit, configured to: obtain state information of a communication system; determine, based on the state information, performance corresponding to each of M first decisions and/or a quantity of times each first decision is explored, wherein the M first decisions are decisions that are explorable under the state information, and M is a positive integer; and determine a target first decision from the M first decisions based on the performance corresponding to each first decision and/or the quantity of times each first decision is explored.

29. The apparatus according to claim 28, wherein
the processing unit is further configured to: determine performance corresponding to each of K second decisions and/or a quantity of times each second decision is explored, wherein the K second decisions are decisions that are explorable after the target first decision is selected, and K is a positive integer; and determine a target second decision from the K second decisions based on the performance corresponding to each second decision and/or the quantity of times each second decision is explored.

30. The apparatus according to claim 28 or 29, wherein
the processing unit is specifically configured to: cyclically perform the following steps N times, to obtain the performance corresponding to each first decision and/or the quantity of times each first decision is explored, wherein N is an integer greater than 1: selecting a to-be-explored first decision from the M first decisions based on current performance corresponding to each first decision and/or a current quantity of times each first decision is explored; and updating, based on the state information and a model of the communication system, performance corresponding to the to-be-explored first decision, and/or adding 1 to a quantity of times the to-be-explored first decision is explored.

31. The apparatus according to claim 30, wherein
the processing unit is further configured to: select a to-be-explored second decision from the K second decisions based on current performance corresponding to each of the K second decisions and/or a current quantity of times each second decision is explored, wherein the K second decisions are decisions that are explorable after the to-be-explored first decision is selected; update, based on the state information and a model of the communication system, performance corresponding to the to-be-explored second decision, and/or add 1 to a quantity of times the to-be-explored second decision is explored; and update, based on the performance corresponding to the to-be-explored second decision, performance corresponding to the to-be-explored first decision, and/or add 1 to a quantity of times the to-be-explored first decision is explored.

32. The apparatus according to claim 30 or 31, wherein
the processing unit is specifically configured to: select the to-be-explored first decision from the M first decisions based on the current performance corresponding to each first decision and/or the current quantity of times each first decision is explored, and an exploration coefficient of each first decision, wherein the exploration coefficient is used to control a tendency in decision selection.

33. The apparatus according to claim 32, wherein
the processing unit is specifically configured to: select the to-be-explored first decision from the M first decisions based on $y_1 = x_1 + C_1 \cdot b_1$, wherein a value of $y_1$ corresponding to the to-be-explored first decision is the largest, $x_1$ is a function of the current performance corresponding to each first decision, $C_1$ is the exploration coefficient, $C_1$ is a constant, and $b_1$ is a function of a reciprocal of the current quantity of times each first decision is explored.

34. The apparatus according to claim 33, wherein
the processing unit is specifically configured to: determine the to-be-explored first decision from the M first decisions

$$y_1 = X_{1d} + C_1 \cdot \sqrt{\frac{2 \ln N_1}{N_{1d}}}$$

based on , wherein $X_{1d}$ is current performance corresponding to the $d^{th}$ first decision in the M first decisions, $N_1$ is a current total quantity of times the M first decisions are explored, and $N_{1d}$ is a current quantity of times the $d^{th}$ first decision is explored.

35. The apparatus according to claim 28 or 29, wherein
the processing unit is specifically configured to: determine, based on the state information and historical information, the performance corresponding to each first decision and/or the quantity of times each first decision is explored, wherein the historical information comprises performance corresponding to each first decision and/or a quantity of times each first decision is explored under the state information.

36. The apparatus according to any one of claims 28 to 35, wherein
the processing unit is specifically configured to: determine the target first decision from the M first decisions based on the performance corresponding to each first decision and/or the quantity of times each first decision is explored, and an exploration coefficient of each first decision, wherein the exploration coefficient is used to control a tendency in decision selection.

37. The apparatus according to claim 36, wherein
the processing unit is specifically configured to: select the target first decision from the M first decisions based on $y_2 = x_2 + C_2 \cdot b_2$, wherein a value of $y_2$ corresponding to the target first decision is the largest, $x_2$ is a function of the performance corresponding to each first decision, $C_2$ is the exploration coefficient, and $b_2$ is a function of a reciprocal of the quantity of times each first decision is explored.

38. The apparatus according to claim 37, wherein
the processing unit is specifically configured to: determine the target first decision from the M first decisions based

$$y_2 = X_{2d} + C_2 \cdot \sqrt{\frac{2 \ln N_2}{N_{2d}}}$$

on , wherein $X_{2d}$ is performance corresponding to the $d^{th}$ first decision in the M first decisions, $N_2$ is a total quantity of times the M first decisions are explored, $N_{2d}$ is a quantity of times the $d^{th}$ first decision is explored, and $C_2$ is a constant, $C_2$ changes with $N_{2d}$, or $C_2$ is determined by a neural network model.

39. The apparatus according to claim 38, wherein
if $C_2$ changes with $N_{2d}$, $C_2$ is 0 when $N_{2d}$ is less than a preset threshold.

40. The apparatus according to claim 39, wherein

$$C_2 = \begin{cases} C_r > 0 & \text{if } N_{2d} \geq N_t \\ 0 & \text{if } N_{2d} < N_t \end{cases}$$

$C_2$ meets , $N_t$ is the preset threshold, $N_t = \sigma \cdot N_2$, and $\sigma$ is a preset constant.

41. The apparatus according to claim 40, wherein
the processing unit is further configured to: train the neural network model based on the state information and the target first decision, wherein the neural network model is used to output $C_r$.

42. The apparatus according to claim 40 or 41, wherein
the processing unit is further configured to: obtain a parameter used for decision exploration, wherein the parameter comprises at least one of a performance indicator, $N_2$, $C_2$, $C_r$, $\sigma$, or $N_t$.

43. The apparatus according to claim 42, wherein
the processing unit is specifically configured to obtain the parameter based on a task type.

44. The apparatus according to any one of claims 28 to 43, wherein
the processing unit is further configured to: obtain support information, wherein the support information is used to determine performance corresponding to the first decision, the support information comprises at least one of a simulator of the model of the communication system, a simulation condition of the model of the communication system, or historical information of the communication system, and the historical information comprises performance corresponding to each decision and/or a quantity of times each decision is explored in different states of the communication system.

45. The apparatus according to any one of claims 40 to 43, wherein
the apparatus further comprises a transceiver unit, configured to: receive a sixth message sent by an access network device, wherein the sixth message is used to query the parameter used for decision exploration, and the parameter comprises at least one of the performance indicator, $N_2$, $C_2$, $C_r$, $\sigma$, or $N_t$; and send a seventh message to the access network device, wherein the seventh message is used to indicate the parameter.

46. The apparatus according to claim 45, wherein
the transceiver unit is further configured to: receive a first message sent by the access network device, wherein the first message is used to query whether a decision exploration capability is provided; send a second message to the access network device, wherein the second message is used to indicate that the decision exploration capability is provided; and receive a fifth message sent by the access network device, wherein the fifth message is used to indicate that the decision exploration capability is registered with a core network device.

47. The apparatus according to claim 45 or 46, wherein
the transceiver unit is further configured to: receive an eighth message sent by a terminal, wherein the eighth message is used to request to start decision exploration; send an exploration result to the terminal, wherein the exploration result comprises information about the target first decision; and receive a tenth message sent by the terminal, wherein the tenth message is used to request to end decision exploration.

48. A communication apparatus, wherein the apparatus comprises:
a transceiver unit, configured to: send a first message to a terminal, wherein the first message is used to query whether a decision exploration capability is provided; receive a second message sent by the terminal, wherein the second message is used to indicate that the decision exploration capability is provided; send a third message to a core network device, wherein the third message is used to request to register the decision exploration capability; receive a fourth message sent by the core network device, wherein the fourth message is used to indicate that the decision exploration capability is registered; and send a fifth message to the terminal, wherein the fifth message is used to indicate that the decision exploration capability is registered with the core network device.

49. The apparatus according to claim 48, wherein

the transceiver unit is further configured to: send a sixth message to the terminal, wherein the sixth message is used to query a parameter used for decision exploration; and receive a seventh message sent by the terminal, wherein the seventh message is used to indicate the parameter; and
the apparatus further comprises a processing unit, configured to estimate a decision exploration time based on the parameter.

50. The apparatus according to claim 48 or 49, wherein
the transceiver unit is further configured to: send support information to the terminal, wherein the support information comprises at least one of a simulator of a model of a communication system, a simulation condition of the model of the communication system, or historical information of the communication system, and the historical information comprises performance corresponding to each decision and/or a quantity of times each decision is explored in different states of the communication system.

51. A communication apparatus, wherein the apparatus comprises:
a transceiver unit, configured to send an eighth message to an access network device, wherein the eighth message is used to request to start decision exploration; receive an exploration result sent by the access network device; and send a tenth message to the access network device, wherein the tenth message is used to request to end decision exploration.

52. A communication apparatus, wherein the apparatus comprises:
a transceiver unit, configured to: receive a thirteenth message sent by an access network device, wherein the thirteenth message is used to request historical information, and the historical information comprises performance corresponding to each decision and/or a quantity of times each decision is explored in different states of a communication system; and send a fifteenth message to the access network device, wherein the fifteenth message is used to indicate the historical information.

53. The apparatus according to claim 52, wherein
the transceiver unit is further configured to: receive a third message sent by the access network device, wherein the third message is used to request to register a decision exploration capability for a terminal; and send a fourth message to the access network device, wherein the fourth message is used to indicate that the decision exploration capability is registered.

54. The apparatus according to claim 52 or 53, wherein
the apparatus further comprises a processing unit, configured to: before the fourth message is sent to the access network device, determine to allow the terminal to explore a decision.

55. A decision selection apparatus, comprising at least one processor, wherein the at least one processor is coupled to at least one memory, and the at least one processor is configured to execute a computer program or instructions stored in the at least one memory, so that the apparatus performs the method according to any one of claims 1 to 27.

56. A chip, comprising a logic circuit and a communication interface, wherein the communication interface is configured to receive to-be-processed data and/or information, the logic circuit is configured to perform the data and/or information processing according to any one of claims 1 to 27, and the communication interface is further configured to output a processing result obtained by the logic circuit.

57. A computer-readable storage medium, storing computer instructions, wherein when the computer instructions are run on a computer, the method according to any one of claims 1 to 27 is implemented.

58. A computer program product, wherein the computer program product comprises a computer program or instructions, and when the computer program or instructions are run on a computer, the method according to any one of claims 1 to 27 is performed.

59. A computer program, wherein when the computer program is run on a computer, the method according to any one of claims 1 to 27 is performed.

60. A wireless communication system, wherein the wireless communication system comprises the apparatus according to any one of claims 28 to 54.

Access network
device 110

Terminal 120

Terminal 130

FIG. 1

FIG. 2

Obtain state information of a communication system — 310

Determine, based on the state information, performance corresponding to each of M first decisions and/or a quantity of times each first decision is explored — 320

Determine a target first decision from the M first decisions based on the performance corresponding to each first decision and/or the quantity of times each first decision is explored — 330

Determine performance corresponding to each of K second decisions and/or a quantity of times each second decision is explored — 340

Determine a target second decision from the K second decisions based on the performance corresponding to each second decision and/or the quantity of times each second decision is explored — 350

FIG. 3

State of a communication system

Model-based exploration

Query

Explorable decision A | Explorable decision B | Explorable decision C | Explorable decision D

Historical information | Historical information | Historical information | Historical information

Performance A/Quantity NA of times | Performance B/Quantity NB of times | Performance C/Quantity NC of times | Performance D/Quantity ND of times

Reliable communication decision

FIG. 4

EP 4 228 330 A1

```
┌─────────────────────────┐
│  Performance and a quantity │
│  of times corresponding to a │
│   decision B in a state A   │
└─────────────────────────┘
```

```
┌─────────────────────────┐        ┌─────────────────────────┐
│  Performance and a quantity │        │  Performance and a quantity │
│  of times corresponding to a │        │  of times corresponding to a │
│  decision C in a state A+B  │        │ decision D in the state A+B │
└─────────────────────────┘        └─────────────────────────┘
```

```
┌──────────────────────┐   ┌──────────────────────┐   ┌──────────────────────┐
│ Performance and a quantity │   │ Performance and a quantity of │   │ Performance and a quantity of │
│ of times corresponding to a │   │   times corresponding to a   │   │   times corresponding to a   │
│ decision E in a state A+B+C │   │ decision F in the state A+B+C │   │ decision G in the state A+B+C │
└──────────────────────┘   └──────────────────────┘   └──────────────────────┘
```

FIG. 5

State of a communication
system

Model-based exploration

Perform a single time of
exploration

| Explorable decision A | Explorable decision B | Explorable decision C | Explorable decision D |

| Communication model | Communication model | Communication model | Communication model |

| Performance A/ Quantity NA of times | Performance B/ Quantity NB of times | Performance C/ Quantity NC of times | Performance D/ Quantity ND of times |

Reliable communication
decision

A quantity of exploration times is less
than N, and exploration continues

FIG. 6

FIG. 7

FIG. 8

FIG. 9

FIG. 10

Apparatus 1100

Processing unit 1110

Transceiver unit 1120

FIG. 11

Apparatus 1200

Processor 1210

Interface circuit 1220

Memory 1230

FIG. 12

## INTERNATIONAL SEARCH REPORT

| International application No. |
|---|
| **PCT/CN2021/131777** |

**A. CLASSIFICATION OF SUBJECT MATTER**

H04W 48/18(2009.01)i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNPAT; CNKI; WPI; EPODOC; IEEE: 选择, 决策, 策略, 状态, 性能, 次数, 探索, 搜索, 目标, 查询, 请求, 能力, 注册, 核心网, 历史信息, state, policy, select, search, performance, number, query, request, capability, registration, Core Network

**C. DOCUMENTS CONSIDERED TO BE RELEVANT**

| Category* | Citation of document, with indication, where appropriate, of the relevant passages | Relevant to claim No. |
|---|---|---|
| X | CN 109445947 A (NEUSOFT CORPORATION) 08 March 2019 (2019-03-08) description, paragraphs [0077]-[0118] and paragraphs [0194]-[0200] | 1-18, 25, 27-45, 52, 54-60 |
| X | CN 101299748 A (HUAWEI TECHNOLOGIES CO., LTD.) 05 November 2008 (2008-11-05) description, pages 6-7 and 11 | 21, 22, 48, 49, 55-60 |
| X | WO 2013049996 A1 (CHINA MOBILE COMMUNICATIONS GROUP CO., LTD.) 11 April 2013 (2013-04-11) description, page 5 | 24, 51, 55-60 |
| Y | CN 109445947 A (NEUSOFT CORPORATION) 08 March 2019 (2019-03-08) description, paragraphs [0077]-[0118] and paragraphs [0194]-[0200] | 19, 20, 23, 26, 27, 46, 47, 50, 53-60 |
| Y | CN 101299748 A (HUAWEI TECHNOLOGIES CO., LTD.) 05 November 2008 (2008-11-05) description, pages 6, 7, and 11 | 19, 23, 26, 27, 46, 47, 50, 53-60 |
| Y | WO 2013049996 A1 (CHINA MOBILE COMMUNICATIONS GROUP CO., LTD.) 11 April 2013 (2013-04-11) description, page 5 | 20, 47, 55-60 |
| A | CN 1571355 A (HUAWEI TECHNOLOGIES CO., LTD.) 26 January 2005 (2005-01-26) entire document | 1-60 |

☑ Further documents are listed in the continuation of Box C.   ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **09 February 2022** | **16 February 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/131777**

### C.    DOCUMENTS CONSIDERED TO BE RELEVANT

| Category* | Citation of document, with indication, where appropriate, of the relevant passages | Relevant to claim No. |
|---|---|---|
| A | CN 110519816 A (TP-LINK TECHNOLOGIES CO., LTD.) 29 November 2019 (2019-11-29) entire document | 1-60 |
| A | US 2020076857 A1 (MICROSOFT TECHNOLOGY LICENSING, LLC) 05 March 2020 (2020-03-05) entire document | 1-60 |

Form PCT/ISA/210 (second sheet) (January 2015)

## INTERNATIONAL SEARCH REPORT

| International application No. |
| --- |
| **PCT/CN2021/131777** |

| Box No. III | Observations where unity of invention is lacking (Continuation of item 3 of first sheet) |

This International Searching Authority found multiple inventions in this international application, as follows:

[1]  Independent claims (1, 24, 25, 28, 51, 52) and independent claims (21, 48) all set forth a decision selection method and a communication device therof. However, independent claims (1, 24, 25, 28, 51, 52) mainly relate to determining target decision according to the performance corresponding to the decision and/or the number of explorations of the decision, while independent claims (21, 48) mainly relate to querying whether a decision exploration capability is comprised, and registering the decision exploration capability. Independent claims (1, 24, 25, 28, 51, 52) and independent claims (21, 48) do not share a same or corresponding special technical feature that makes a contribution over the prior art, are not technically related, do not belong to a single general inventive concept, and thus do not satisfy the requirement of unity of invention defined in PCT Rule 13.1.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

## INTERNATIONAL SEARCH REPORT
### Information on patent family members

International application No.

**PCT/CN2021/131777**

| Patent document cited in search report | | | Publication date (day/month/year) | Patent family member(s) | | | Publication date (day/month/year) |
|---|---|---|---|---|---|---|---|
| CN | 109445947 | A | 08 March 2019 | None | | | |
| CN | 101299748 | A | 05 November 2008 | US | 2010011401 | A1 | 14 January 2010 |
| | | | | CN | 100571278 | C | 16 December 2009 |
| | | | | WO | 2008134955 | A1 | 13 November 2008 |
| WO | 2013049996 | A1 | 11 April 2013 | CN | 103037469 | A | 10 April 2013 |
| CN | 1571355 | A | 26 January 2005 | None | | | |
| CN | 110519816 | A | 29 November 2019 | None | | | |
| US | 2020076857 | A1 | 05 March 2020 | EP | 3827380 | A1 | 02 June 2021 |
| | | | | WO | 2020047314 | A1 | 05 March 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011322773